# EUROPEAN PATENT APPLICATION

(11) **EP 4 696 449 A1**
(43) Date of publication of application: **18.02.2026**
(21) Application number: 23963037.9
(22) Date of filing: 26.12.2023
(51) Int. Cl.: B23K 26/16

(54) **DROSS CONVEYANCE CONVEYOR, LASER PROCESSING DEVICE, AND WORKPIECE PROCESSING METHOD**

(71) Applicant: Yamazaki Mazak Corporation, Niwa-gun, Aichi 480-0197 (JP)
(72) Inventor: MICHINAKA, Kengo, Niwa-gun, Aichi 480-0197 (JP); KOBAYASHI, Yoji, Niwa-gun, Aichi 480-0197 (JP); SASAKI, Satoshi, Niwa-gun, Aichi 480-0197 (JP); TAHARA, Makoto, Niwa-gun, Aichi 480-0197 (JP)
(74) Representative: TBK
(86) International application number: PCT/JP2023/046601
(87) International publication number: WO 2025/141681

(57) **Abstract**

A dross transportation conveyer includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser beam on a workpiece; a first protection component that covers at least partially a first transportation surface of the first transportation plate to prevent the laser beam from reaching the first transportation plate; and a second protection component that covers at least partially a second transportation surface of the second transportation plate to prevent the laser beam from reaching the second transportation plate.

## Description

### Technical Field

The present invention relates to a dross transportation conveyor, a laser beam machine apparatus, and a workpiece machining method.

### Background Art

A laser beam machine including a chip conveyor is known.

As a related art, Patent Literature 1 discloses a chip conveyor of a laser beam machine. The chip conveyor described in Patent Literature 1 includes a large number of plates that constitute a conveyor belt. Each plate is bendably coupled to another plate by a joint.

### Citation List

### Patent Literature

PTL1: Microfilm of JP Utility Model Application No. H03-19091 (published as JP H04-108984 U).

### Summary of Invention

### Technical Problem

An object of the present invention is to provide a dross transportation conveyor, a laser beam machine apparatus, and a workpiece machining method, which are capable of eliminating or minimizing thermal deformation of a transportation plate.

### Solution to Problem

A dross transportation conveyer, according to some embodiments, includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser beam on a workpiece; a first protection component that covers at least partially a first transportation surface of the first transportation plate to prevent the laser beam from reaching the first transportation plate; and a second protection component that covers at least partially a second transportation surface of the second transportation plate to prevent the laser beam from reaching the second transportation plate.

A laser beam machine apparatus, according to some embodiments, includes: a laser beam irradiator comprising a laser head that irradiates a workpiece with a laser beam; a mover that moves the leaser head relative to a workpiece support component that supports the workpiece; a controller configured to control the laser beam irradiator and the mover; and a dross transportation conveyor. The dross transportation conveyor includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of the laser beam on the workpiece; a first protection component that covers at least partially a first transportation surface of the first transportation plate to prevent the laser beam from reaching the first transportation plate; and a second protection component that covers at least partially a second transportation surface of the second transportation plate to prevent the laser beam from reaching the second transportation plate.

A workpiece machining method, according to some embodiments, includes: the steps of: machining a workpiece by irradiating the workpiece with a laser beam; and transporting dross generated by irradiating the workpiece with the laser beam, by using a group of transportation plates including a first transportation plate and a second transportation plate, the first transportation plate extending in a first direction, the second transportation plate being disposed to be adjacent to the first transportation plate and extending in the first direction. The step of machining the workpiece is performed, in a state in which the laser beam reaching the first transportation plate is prevented by a first protection component that covers at least partially a first transportation surface of the first transportation plate. In addition, the step of machining the workpiece is performed in a state in which the laser beam reaching the second transportation plate is prevented by a second protection component that covers at least partially a second transportation surface of the second transportation plate.

### Effects of Invention

According to the present invention, it becomes possible to provide a dross transportation conveyor, a laser beam machine apparatus, and a workpiece machining method, which are capable of eliminating or minimizing thermal deformation of a transportation plate.

### Brief Description of Drawings

[FIG. 1] FIG. 1 is a schematic cross-sectional view of a laser beam machine apparatus according to a first embodiment.
[FIG. 2] FIG. 2 is a schematic cross-sectional view of a part of the laser beam machine apparatus according to the first embodiment.
[FIG. 3] FIG. 3 is a schematic cross-sectional view of a part of a laser beam machine apparatus in a comparative example.
[FIG. 4] FIG. 4 is a schematic perspective view of the laser beam machine apparatus according to the first embodiment.
[FIG. 5] FIG. 5 is a schematic perspective view of a state in which a group of transportation plates including a first transportation plate and a second transportation plate is movable along a circling orbit.
[FIG. 6] FIG. 6 is a schematic perspective view of a dross transportation conveyor according to the first embodiment.
[FIG. 7] FIG. 7 is a schematic cross-sectional view of a part of the laser beam machine apparatus according to the first embodiment.
[FIG. 8] FIG. 8 is an exploded perspective view of a part of the group of transportation plates, schematically illustrating the part of the group of transportation plates.
[FIG. 9] FIG. 9 is a schematic illustration of a state in which the first transportation plate is attached to a first endless chain and a second endless chain.
[FIG. 10] FIG. 10 is an enlarged schematic cross-sectional view of a turn-around portion of the dross transportation conveyor according to the first embodiment.
[FIG. 11] FIG. 11 is an exploded perspective view of the first transportation plate to which a first protection component is attached, a second transportation plate to which a second protection component is attached, and a third transportation plate to which a third protection component is attached, schematically illustrating the first transportation plate, the second transportation plate, and the third transportation plate.
[FIG. 12] FIG. 12 is a view for describing a first example of the protection components.
[FIG. 13] FIG. 13 is a view for describing the first example of the protection components.
[FIG. 14] FIG. 14 is a view for describing the first example of the protection components.
[FIG. 15] FIG. 15 is an exploded perspective view of the first transportation plate to which the first protection component is attached, the second transportation plate to which the second protection component is attached, and the third transportation plate to which the third protection component is attached, schematically illustrating the first transportation plate, the second transportation plate, and the third transportation plate.
[FIG. 16] FIG. 16 is a view for describing a second example of the protection components.
[FIG. 17] FIG. 17 is a view for describing the second example of the protection components.
[FIG. 18] FIG. 18 is an exploded perspective view of the first transportation plate to which the first protection component is attached, the second transportation plate to which the second protection component is attached, and the third transportation plate to which the third protection component is attached, schematically illustrating the first transportation plate, the second transportation plate, and the third transportation plate.
[FIG. 19] FIG. 19 is a view for describing a third example of the protection components.
[FIG. 20] FIG. 20 is a view for describing a fourth example of the protection components.
[FIG. 21] FIG. 21 is a view for describing a fifth example of the protection components.
[FIG. 22] FIG. 22 is a view for describing a sixth example of the protection components.
[FIG. 23] FIG. 23 is an exploded perspective view of the first transportation plate to which the first protection component is attached, the second transportation plate to which the second protection component is attached, and the third transportation plate to which the third protection component is attached, schematically illustrating the first transportation plate, the second transportation plate, and the third transportation plate.
[FIG. 24] FIG. 24 is a view for describing the sixth example of the protection components.
[FIG. 25] FIG. 25 is an exploded perspective view of the first transportation plate to which the first protection component is attached, the second transportation plate to which the second protection component is attached, and the third transportation plate to which the third protection component is attached, schematically illustrating the first transportation plate, the second transportation plate, and the third transportation plate.
[FIG. 26] FIG. 26 is a view for describing a seventh example of the protection components.
[FIG. 27] FIG. 27 is an exploded perspective view of the first transportation plate to which the first protection component is attached, the second transportation plate to which the second protection component is attached, and the third transportation plate to which the third protection component is attached, schematically illustrating the first transportation plate, the second transportation plate, and the third transportation plate.
[FIG. 28] FIG. 28 is a schematic cross-sectional view of a state before the protection component is deflected in the seventh example of the protection components.
[FIG. 29] FIG. 29 is a schematic cross-sectional view of a state after the protection component is deflected in the seventh example of the protection components.
[FIG. 30] FIG. 30 is a schematic plan view of a part of the laser beam machine apparatus according to the first embodiment.
[FIG. 31] FIG. 31 is a schematic cross-sectional view of a state in which the circling orbit of the group of transportation plates includes an upward inclination.
[FIG. 32] FIG. 32 is a schematic side view of the laser beam machine apparatus according to the first embodiment.
[FIG. 33] FIG. 33 is a schematic plan view of a part of the laser beam machine apparatus according to the first embodiment.
[FIG. 34] FIG. 34 is a schematic perspective view of an example of a workpiece support component.
[FIG. 35] FIG. 35 is a schematic perspective view of a laser beam machine apparatus according to a first modification of the first embodiment.
[FIG. 36] FIG. 36 is a schematic plan view of a state in which a machined workpiece is removed from the workpiece support component.
[FIG. 37] FIG. 37 is a schematic perspective view of a laser beam machine apparatus according to a second modification of the first embodiment.
[FIG. 38] FIG. 38 is a schematic illustration of a state in which a controller is capable of controlling a plurality of pieces of to-be-controlled equipment.
[FIG. 39] FIG. 39 is a schematic side view of the laser beam machine apparatus according to the first embodiment.
[FIG. 40] FIG. 40 is a view for describing a cooler.
[FIG. 41] FIG. 41 is a schematic cross-sectional view of a laser beam machine apparatus according to a second embodiment.
[FIG. 42] FIG. 42 is a schematic cross-sectional view of a part of the laser beam machine apparatus according to the second embodiment.
[FIG. 43] FIG. 43 is an exploded perspective view of a first transportation plate to which a first protection component is attached, a second transportation plate to which a second protection component is attached, and a third transportation plate to which a third protection component is attached, schematically illustrating the first transportation plate, the second transportation plate, and the third transportation plate.
[FIG. 44] FIG. 44 is a schematic perspective view of a state in which a group of transportation plates including the first transportation plate and the second transportation plate is movable along the circling orbit.
[FIG. 45] FIG. 45 is a flowchart illustrating an example of a workpiece machining method according to a third embodiment.

### Description of Embodiments

Hereinafter, a dross transportation conveyor 2, a laser beam machine apparatus 1, and a workpiece machining method according to embodiments will be described with reference to the drawings. It is to be noted that in the following description of the embodiments, portions and members having the same functions are denoted by the same reference numerals, and repeated descriptions of the portions and members denoted by the same reference numerals will be omitted.

### (Definition of Terms)

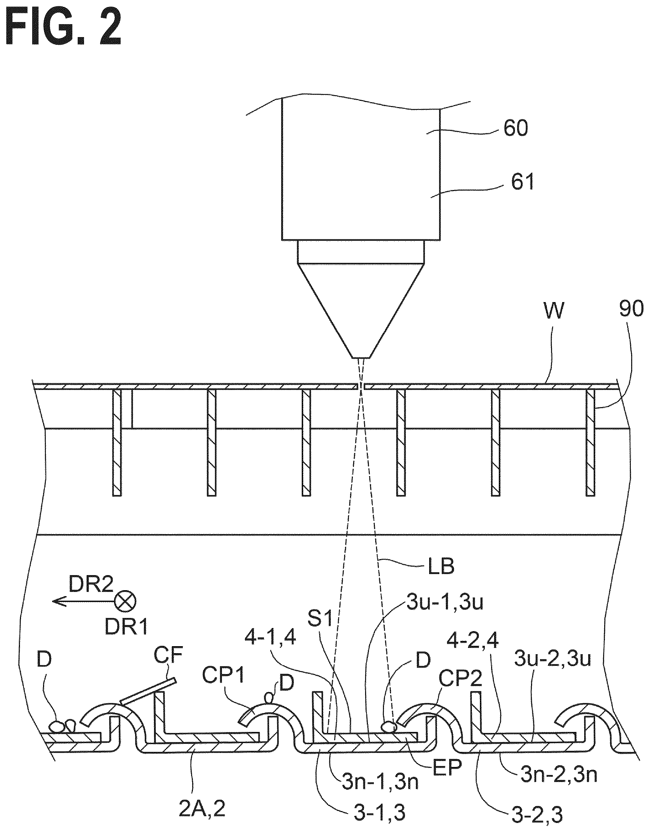

As illustrated in FIG. 2, each transportation plate 3 in a group of transportation plates 3 has a transportation surface 3u. In this respect, the transportation surface means a surface that supports dross directly or indirectly via a protection component 4 or any component in transporting the dross. More specifically, the transportation surface 3u is a surface that faces substantially upward in transporting the dross. For example, a first transportation surface 3u-1 of a first transportation plate 3-1 supports the dross directly or indirectly via a first protection component 4-1, while the first transportation plate 3-1 is transporting the dross. The first transportation surface 3u-1 of the first transportation plate 3-1 faces substantially upward, while the first transportation plate 3-1 is transporting the dross. In addition, a second transportation surface 3u-2 of a second transportation plate 3-2 supports the dross directly or indirectly via a second protection component 4-2, while the second transportation plate 3-2 is transporting the dross. The second transportation surface 3u-2 of the second transportation plate 3-2 faces substantially upward, while the second transportation plate 3-2 is transporting the dross.

As illustrated in FIG. 2, each transportation plate 3 in the group of transportation plates 3 has a back surface 3n. In this respect, the back surface means a surface opposite to the transportation surface 3u in each transportation plate. More specifically, the back surface 3n is a surface that faces substantially downward, in transporting the dross. For example, a first back surface 3n-1 of the first transportation plate 3-1 is a surface located below the first transportation surface 3u-1, while the first transportation plate 3-1 is transporting the dross. The first back surface 3n-1 of the first transportation plate 3-1 faces substantially downward, while the first transportation plate 3-1 is transporting the dross. In addition, a second back surface 3n-2 of the second transportation plate 3-2 is a surface located below the second transportation surface 3u-2, while the second transportation plate 3-2 is transporting the dross. More specifically, the second back surface 3n-2 of the second transportation plate 3-2 faces substantially downward, while the second transportation plate 3-2 is transporting the dross.

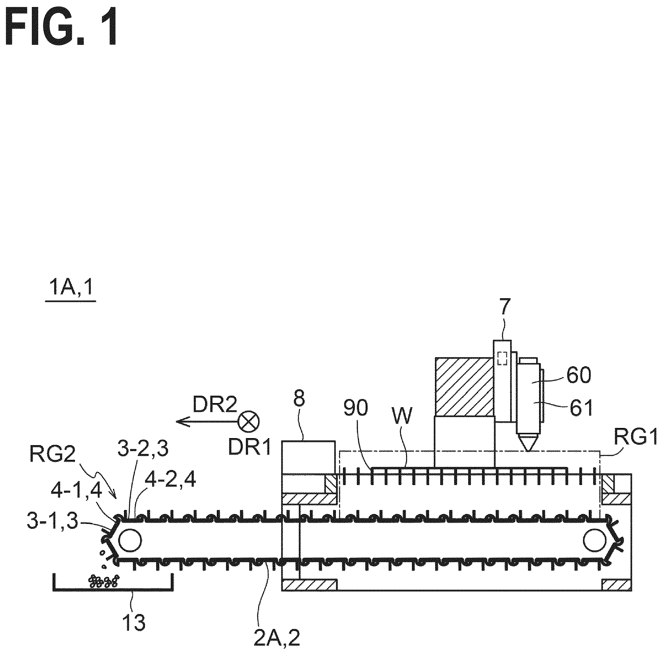

In this respect, a "machine region RG1" is defined as a region that is reachable by a laser beam emitted from a laser beam irradiator 60 (see FIG. 1). A workpiece W, which is arranged in the machine region RG1, is machined (more specifically, cut or drilled) by a laser beam. The dross generated by irradiation of the laser beam on the workpiece W is received by the group of transportation plates 3 in the machine region RG1.

### (Definition of Directions)

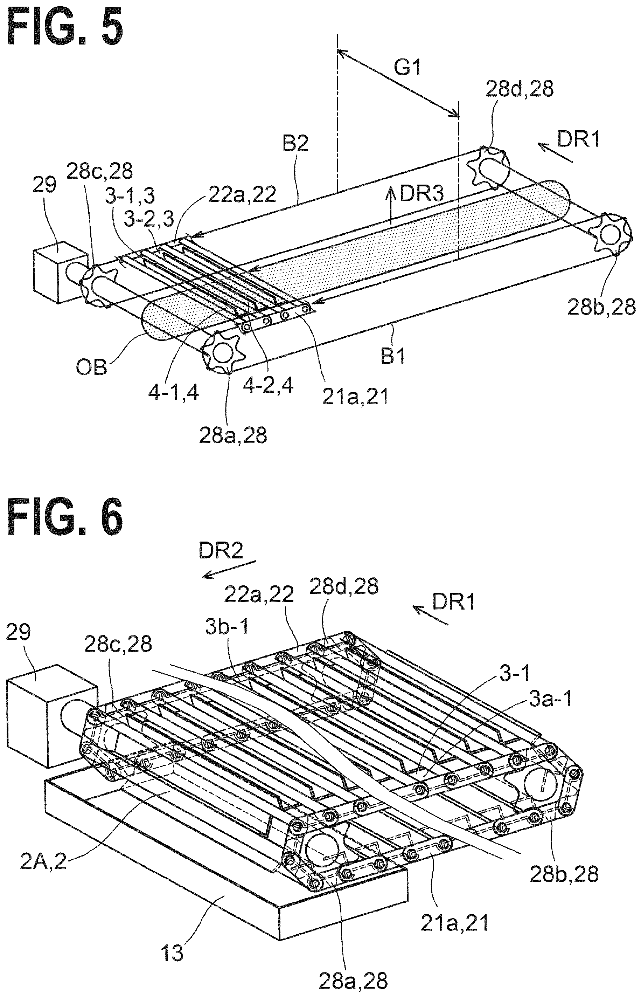

In this respect, a first direction DR1 is defined as an extending direction of the first transportation plate 3-1 (or an extending direction of each transportation plate 3). In this respect, a second direction DR2 is defined as a moving direction of the group of transportation plates 3 (or a moving direction of each transportation plate 3). As illustrated in FIG. 5, In this respect, a third direction DR3 is defined as a direction from the inside of a circling orbit OB of the group of transportation plates 3 (see a portion hatched with dots in FIG. 5) toward the outside of the circling orbit OB. The third direction DR3 coincides with a direction from the back surface 3n toward the transportation surface 3u in each transportation plate 3.

### (First Embodiment)

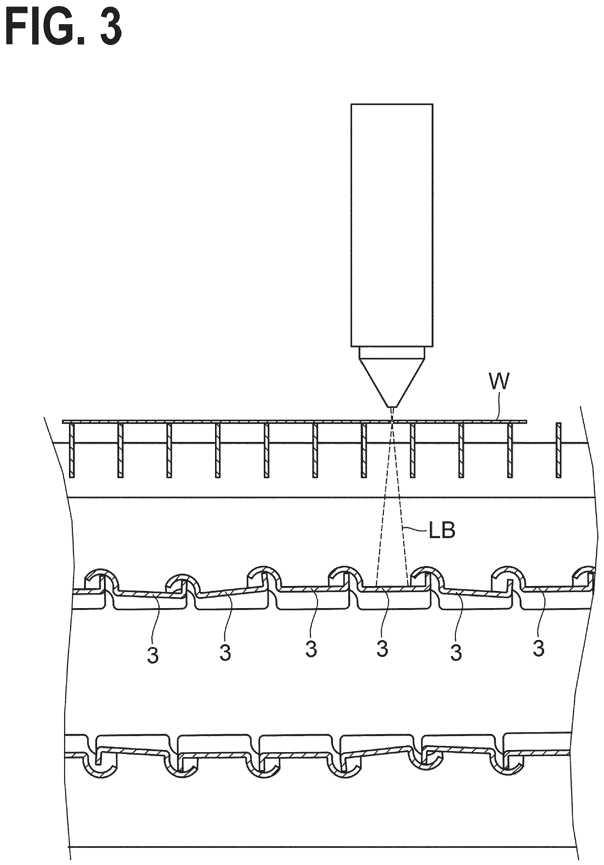

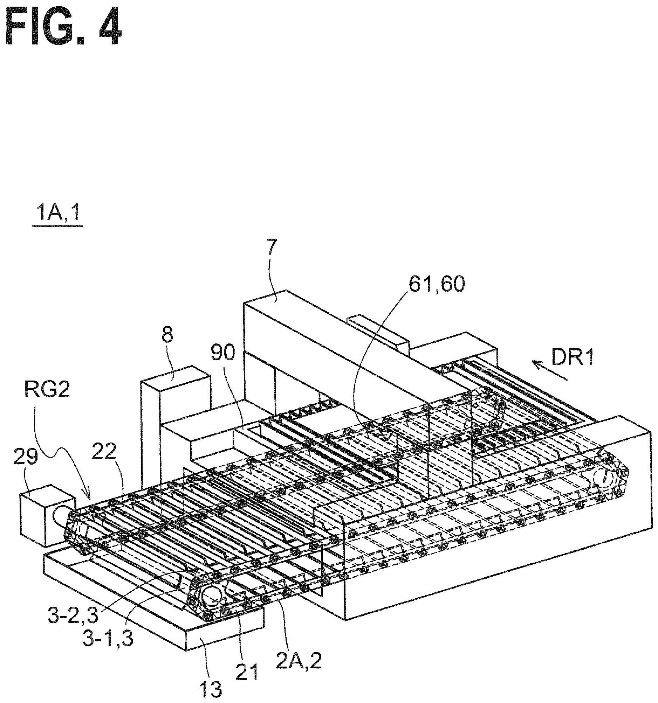

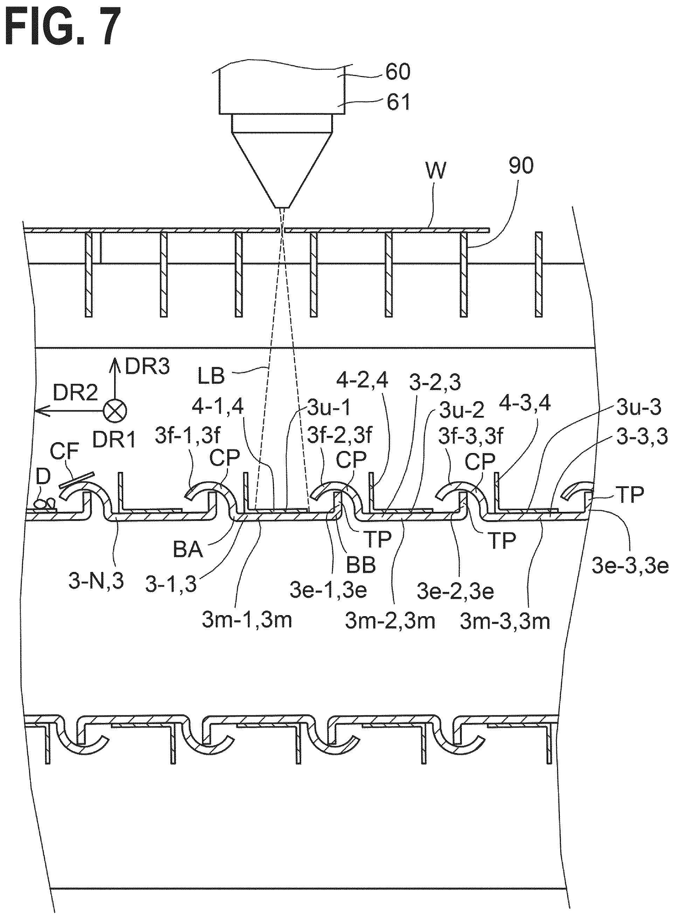

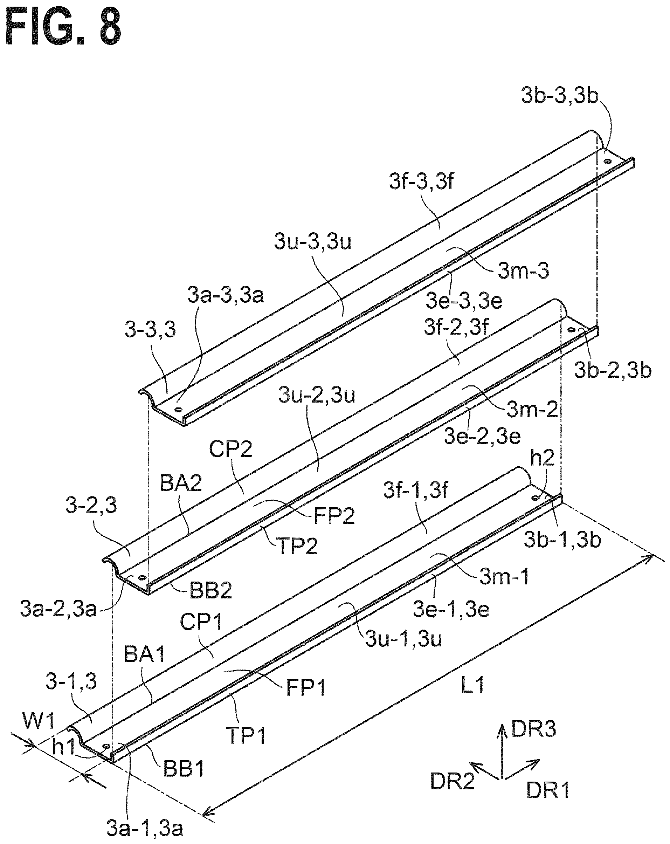

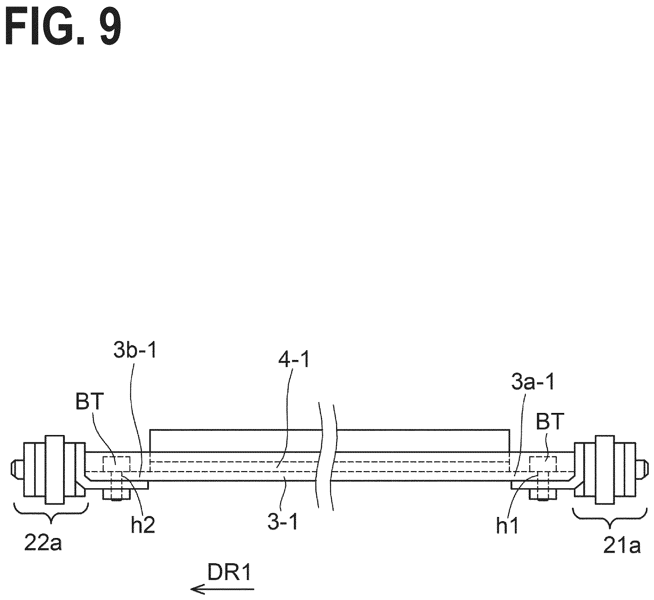

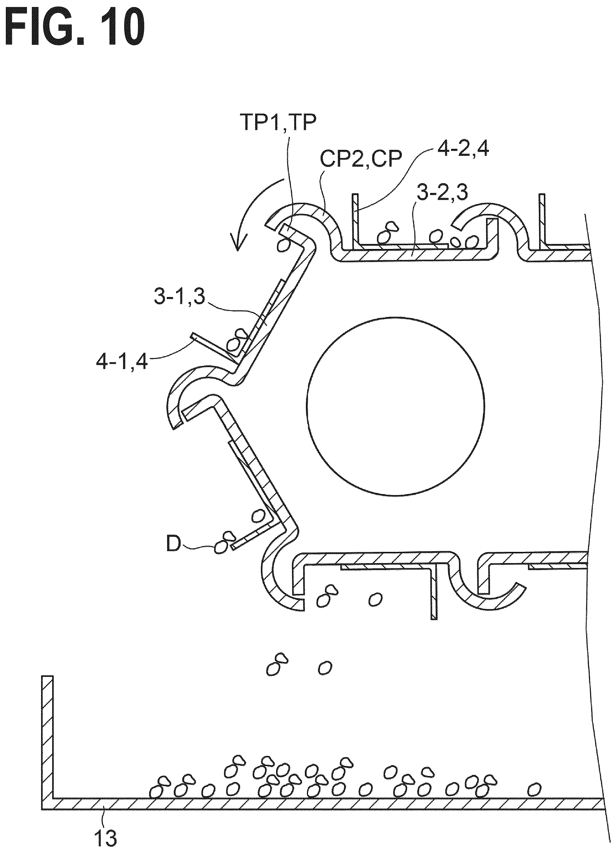

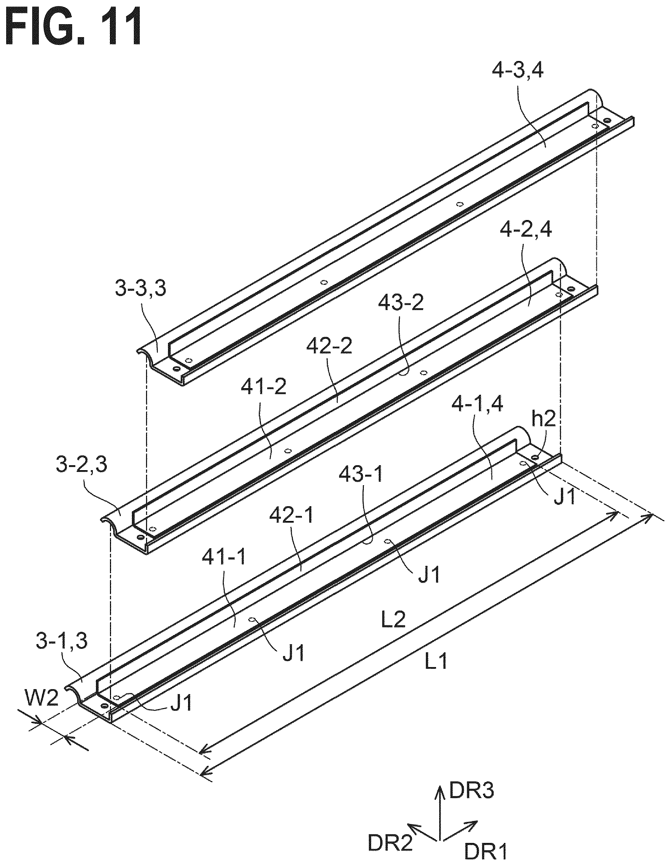

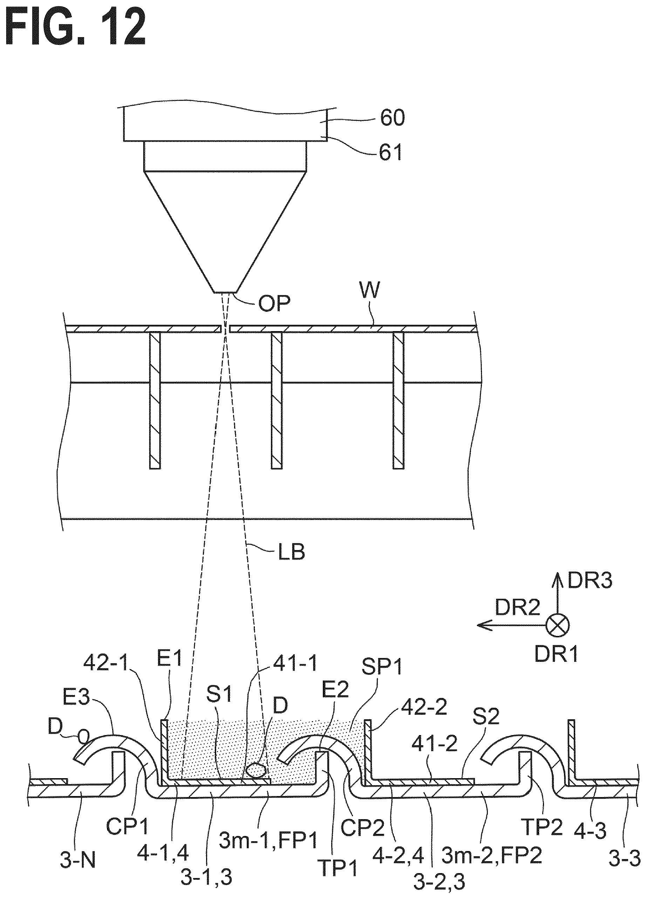

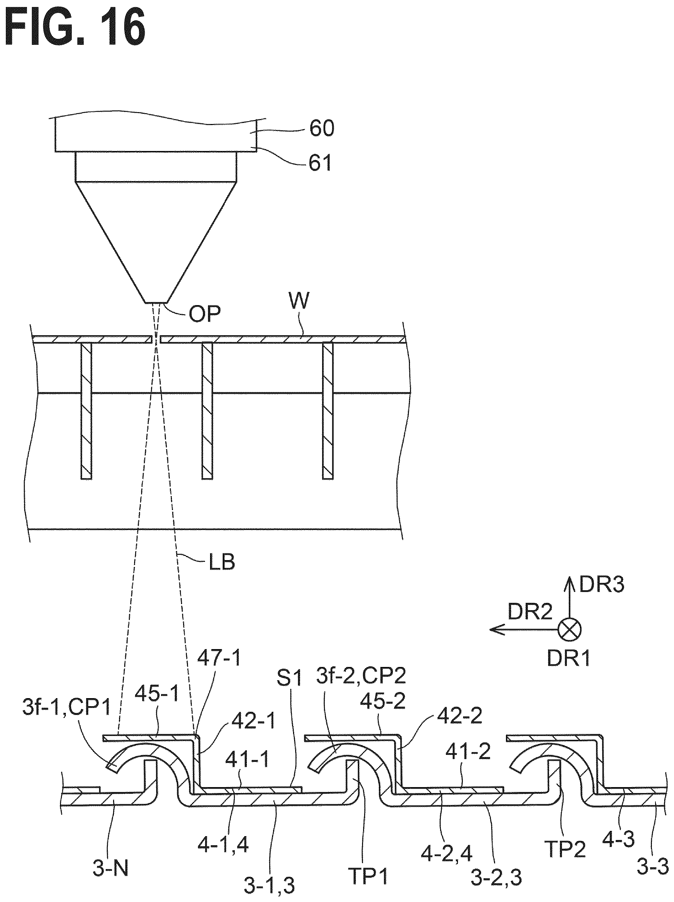

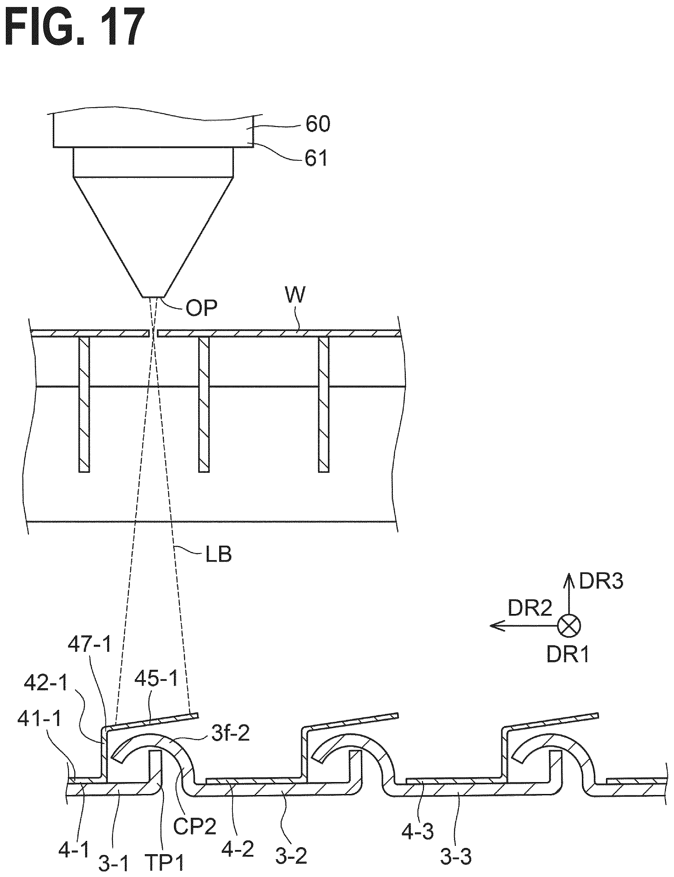

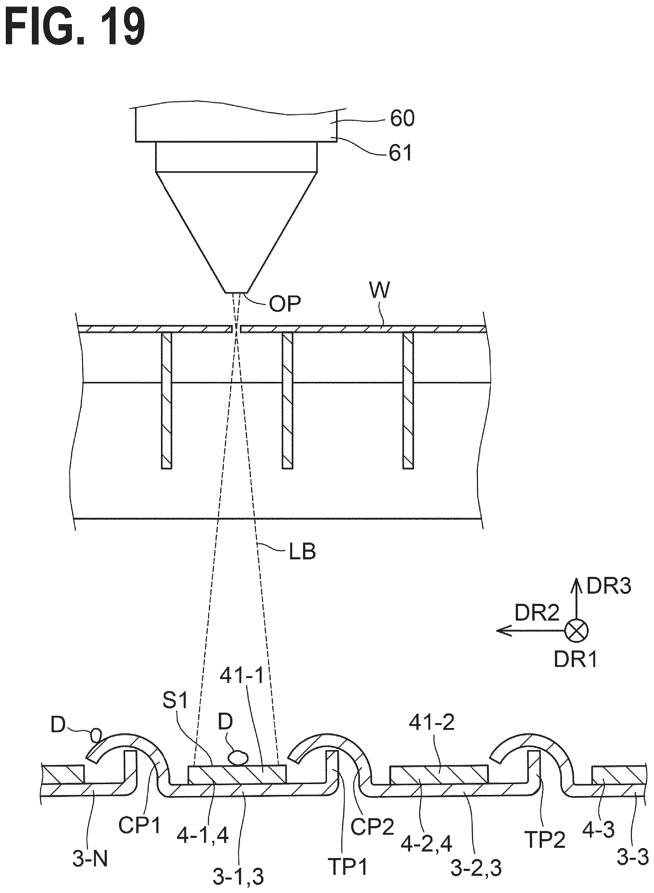

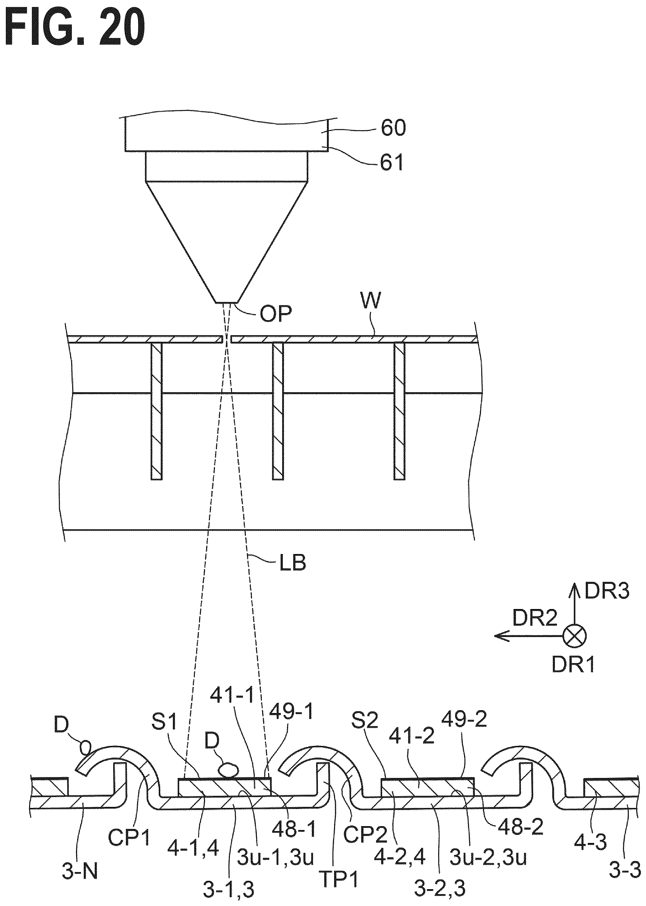

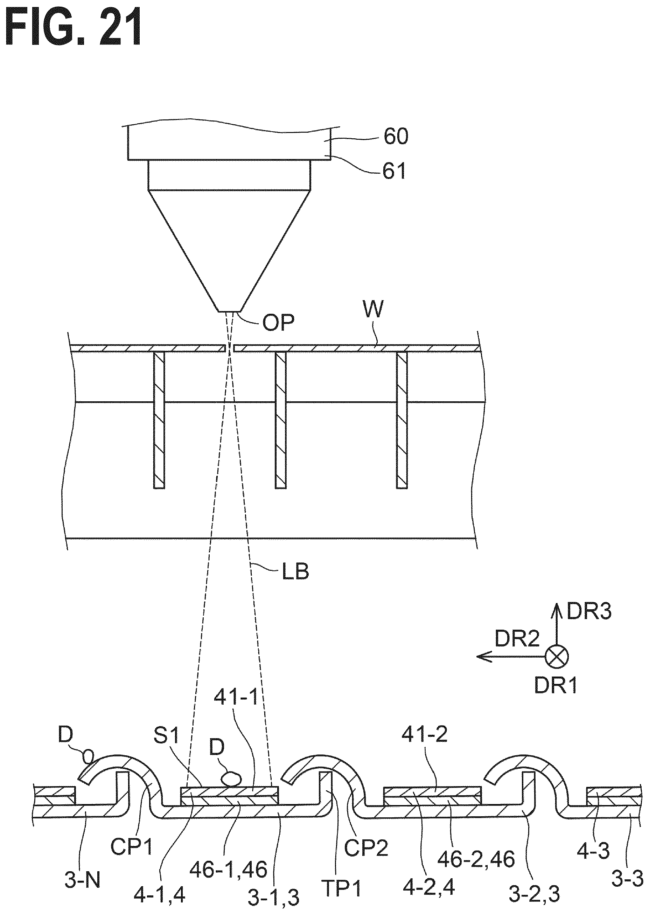

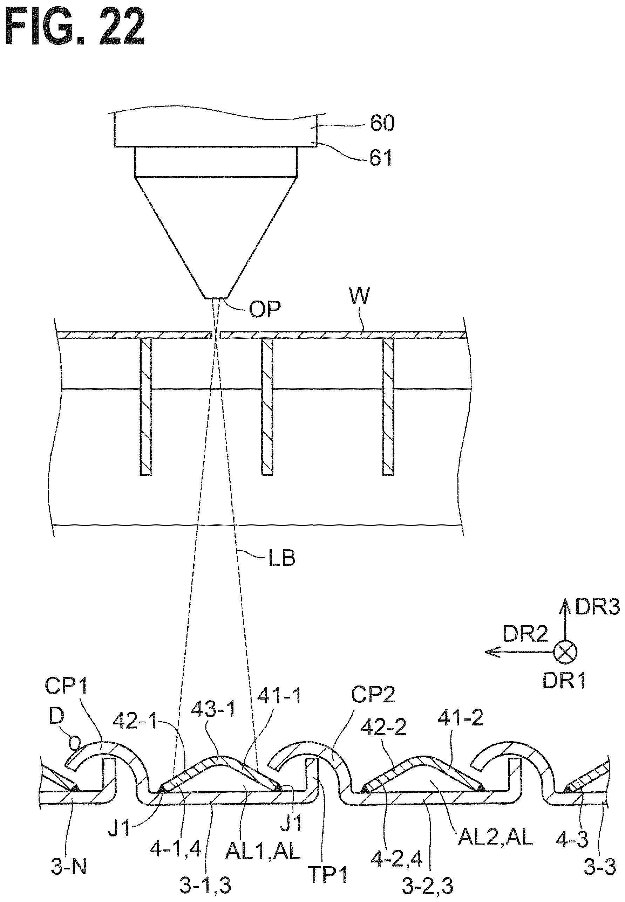

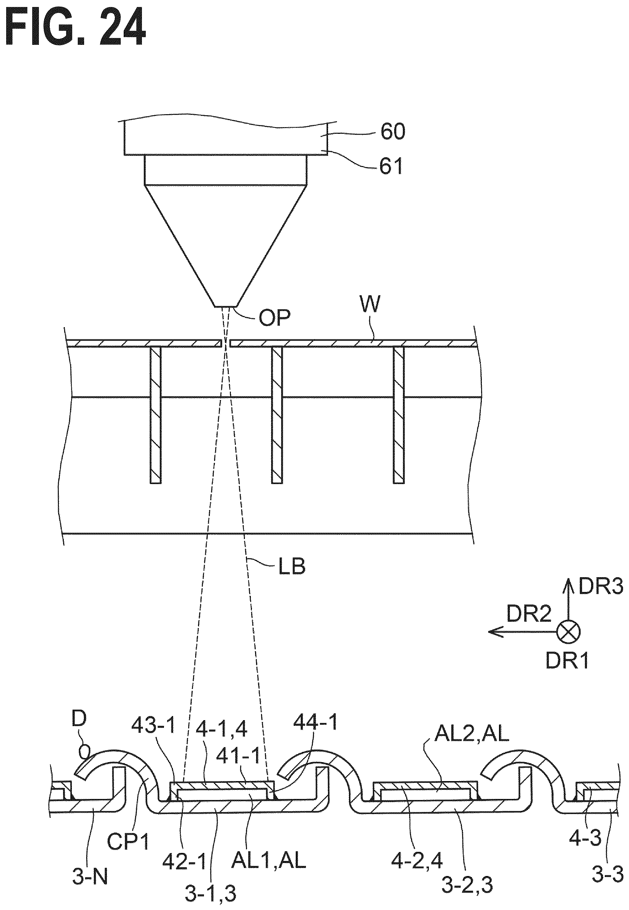

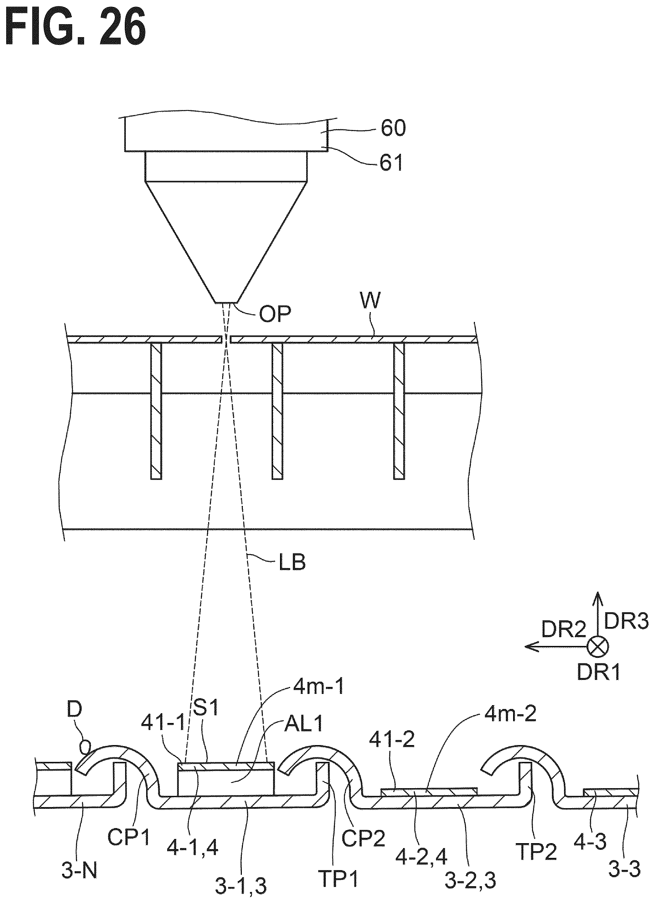

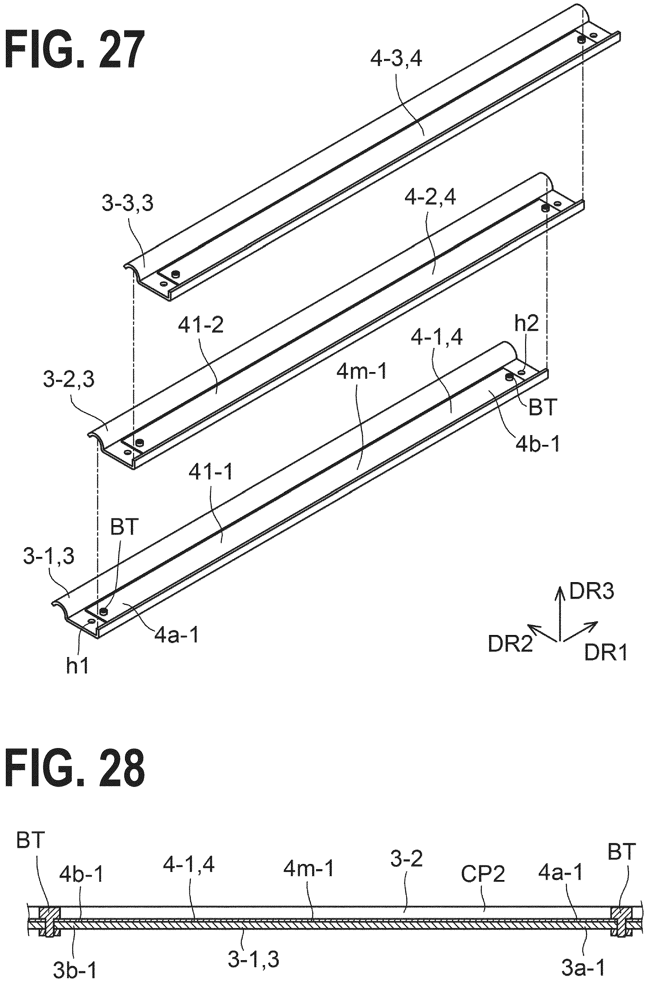

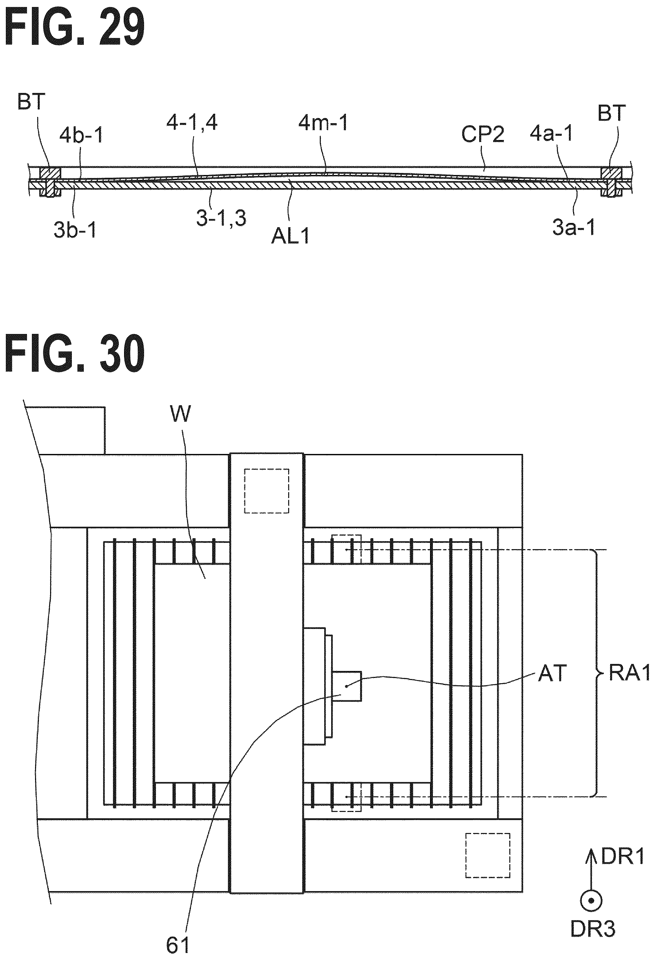

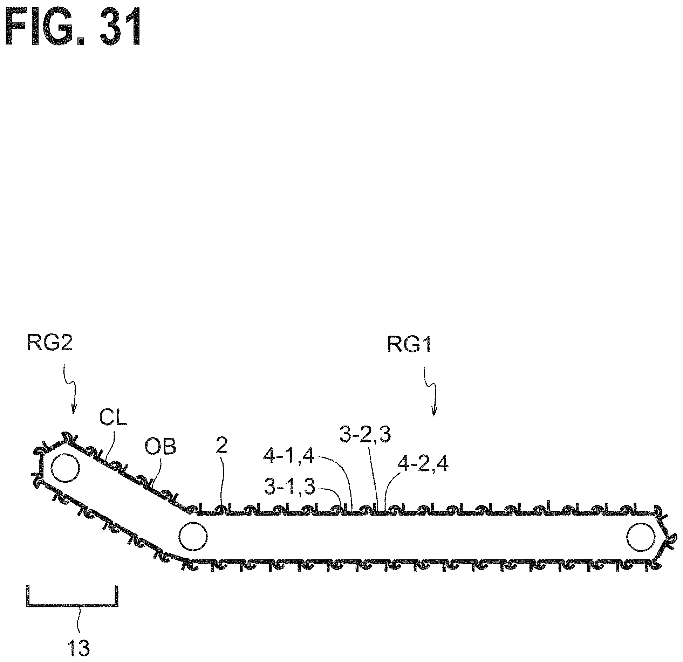

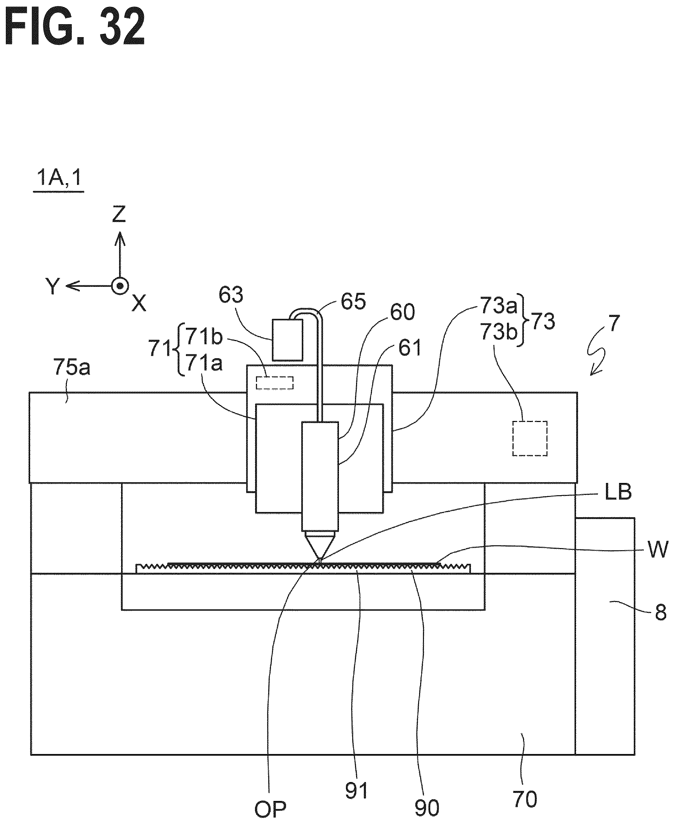

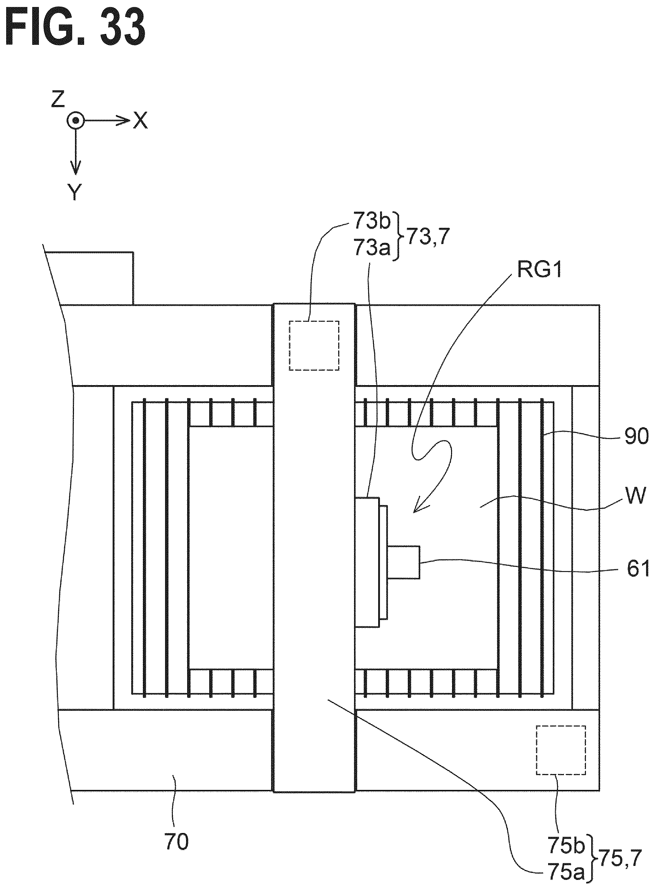

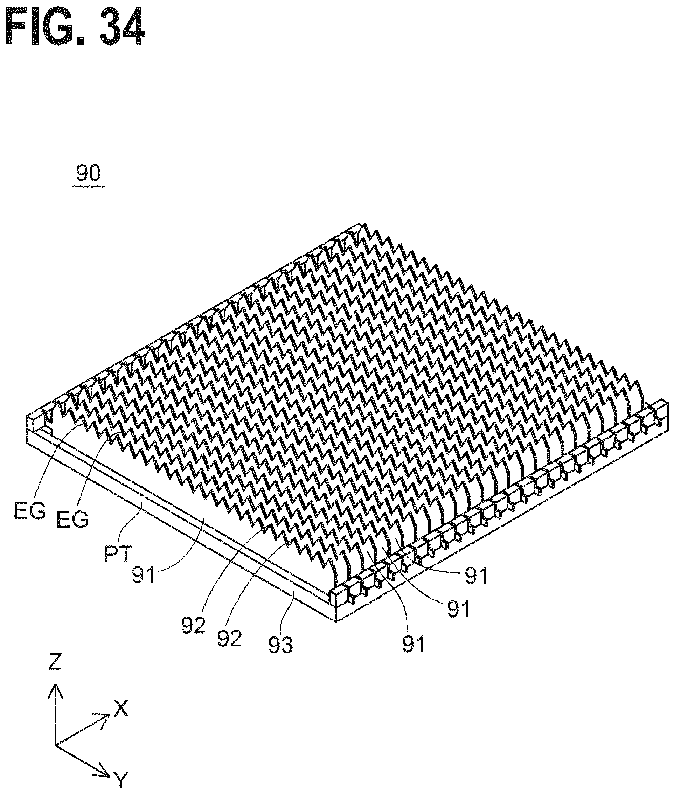

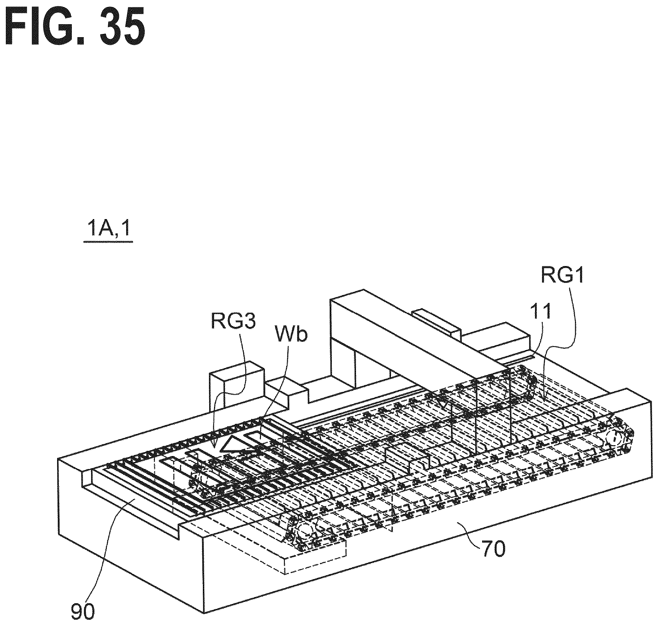

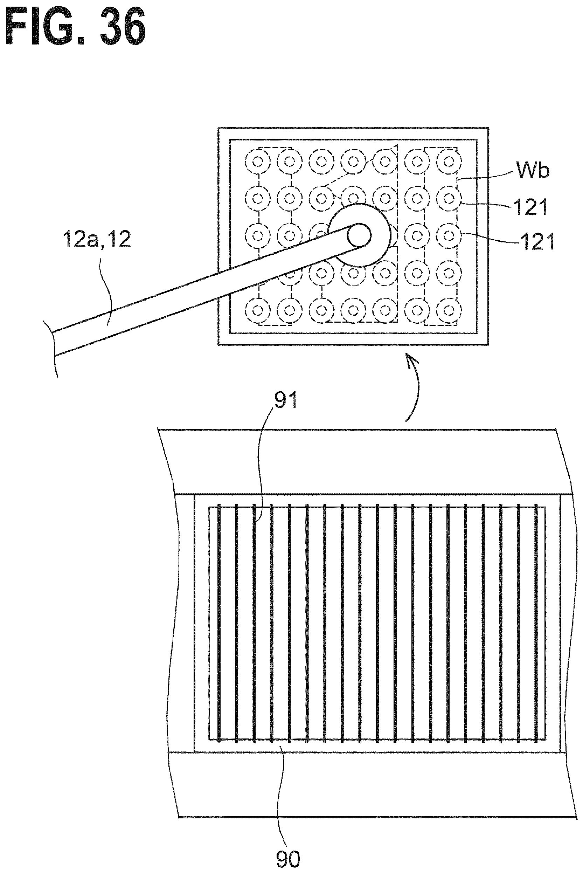

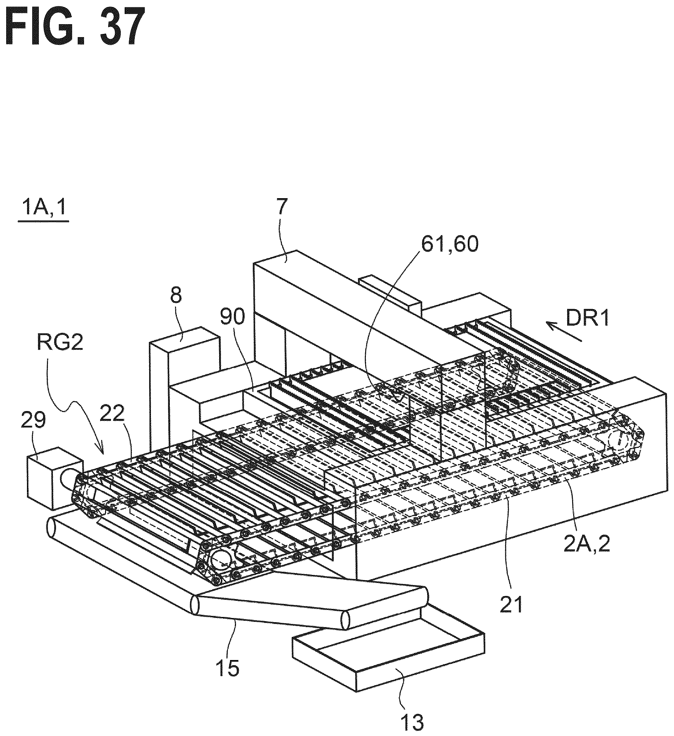

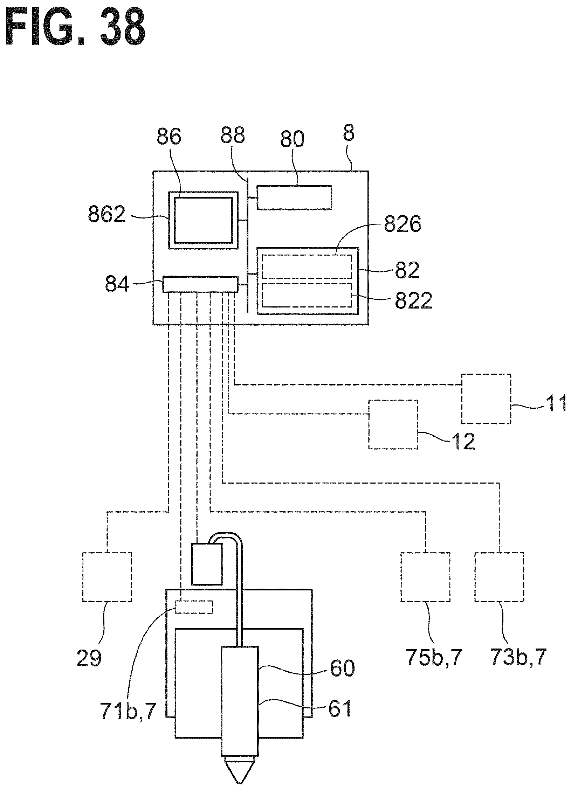

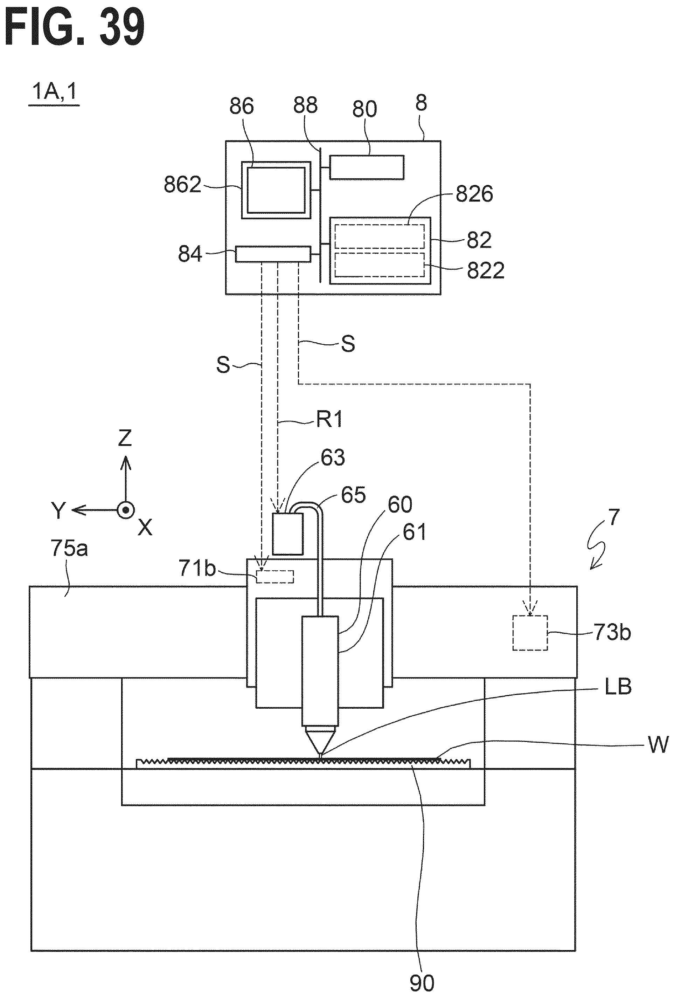

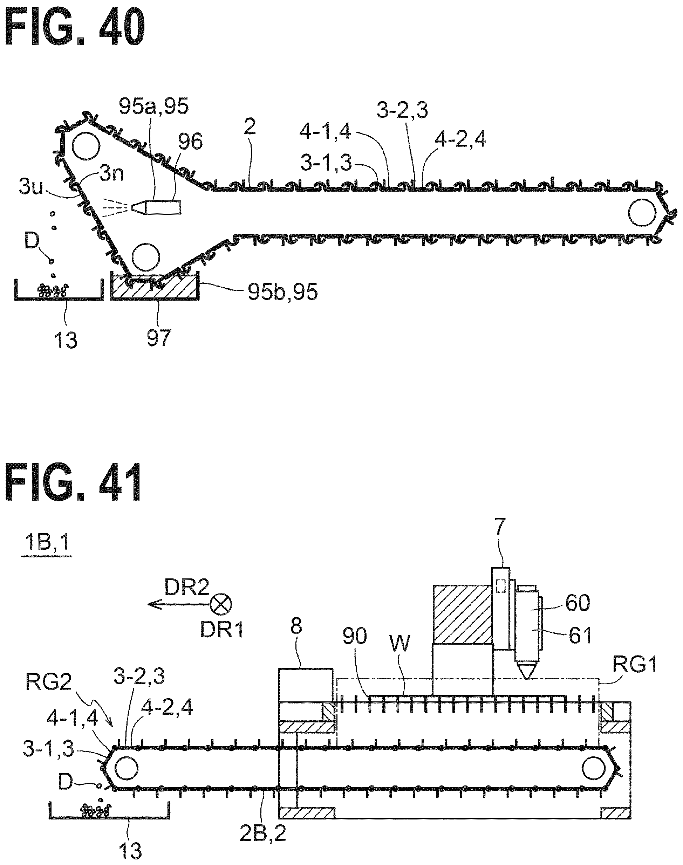

With reference to FIGs. 1 to 40, a dross transportation conveyor 2A and the laser beam machine apparatus 1A according to the first embodiment will be described. FIG. 1 is a schematic cross-sectional view of the laser beam machine apparatus 1A according to the first embodiment. FIG. 2 is a schematic cross-sectional view of a part of the laser beam machine apparatus 1A according to the first embodiment. FIG. 3 is a schematic cross-sectional view of a part of a laser beam machine apparatus in a comparative example. FIG. 4 is a schematic perspective view of the laser beam machine apparatus 1A according to the first embodiment. FIG. 5 is a schematic perspective view of a state in which a group of transportation plates 3, including the first transportation plate 3-1 and the second transportation plate 3-2, is movable along the circling orbit OB. FIG. 6 is a schematic perspective view of the dross transportation conveyor 2A according to the first embodiment. FIG. 7 is a schematic cross-sectional view of a part of the laser beam machine apparatus 1A according to the first embodiment. FIG. 8 is an exploded perspective view of a part of the group of transportation plates 3, schematically illustrating the part of the group of transportation plates. FIG. 9 is a schematic illustration of a state in which the first transportation plate 3-1 is attached to a first endless chain 21a and a second endless chain 22a. FIG. 10 is an enlarged schematic cross-sectional view of a turn-around portion of the dross transportation conveyor 2A according to the first embodiment. FIG. 11, FIG. 15, FIG. 18, FIG. 23, FIG. 25, and FIG. 27 are each an exploded perspective view of the first transportation plate 3-1 to which the first protection component 4-1 is attached, the second transportation plate 3-2 to which the second protection component 4-2 is attached, and a third transportation plate 3-3 to which a third protection component 4-3 is attached, schematically illustrating the first transportation plate 3-1, the second transportation plate 3-2, and the third transportation plate 3-3. FIG. 12 to FIG. 14 are each a view for describing a first example of the protection components 4. FIG. 16 and FIG. 17 are each a view for describing a second example of the protection components 4. FIG. 19 is a view for describing a third example of the protection components 4. FIG. 20 is a view for describing a fourth example of the protection components 4. FIG. 21 is a view for describing a fifth example of the protection components 4. FIG. 22 and FIG. 24 are each a view for describing a sixth example of the protection components 4. FIG. 26 is a view for describing a seventh example of the protection components 4. FIG. 28 is a schematic cross-sectional view of a state before the protection component 4 is deflected in the seventh example of the protection components 4. FIG. 29 is a schematic cross-sectional view of a state after the protection component 4 is deflected in the seventh example of the protection components 4. FIG. 30 is a schematic plan view of a part of the laser beam machine apparatus 1A according to the first embodiment. FIG. 31 is a schematic cross-sectional view of a state in which the circling orbit OB of the group of transportation plates 3 includes an upward inclination CL. FIG. 32 is a schematic side view of the laser beam machine apparatus 1A according to the first embodiment. FIG. 33 is a schematic plan view of a part of the laser beam machine apparatus 1A according to the first embodiment. FIG. 34 is a schematic perspective view of an example of a workpiece support component 90. FIG. 35 is a schematic perspective view of a laser beam machine apparatus 1A according to a first modification of the first embodiment. FIG. 36 is a schematic plan view of a state in which a machined workpiece Wb is removed from the workpiece support component 90. FIG. 37 is a schematic perspective view of a laser beam machine apparatus 1A according to a second modification of the first embodiment. FIG. 38 is a schematic illustration of a state in which a controller 8 is capable of controlling a plurality of pieces of to-be-controlled equipment. FIG. 39 is a schematic side view of the laser beam machine apparatus 1A according to the first embodiment. FIG. 40 is a view for describing a cooler. 95

As illustrated in FIG. 2, the dross transportation conveyor 2A according to the first embodiment includes the group of transportation plates 3, the first protection component 4-1, and the second protection component 4-2.

The group of transportation plates 3 transports dross D, which is generated by irradiation of a laser beam LB on the workpiece W. In addition to the dross D, the group of transportation plates 3 may transport cut-off pieces CF, which are generated by the irradiation of the laser beam LB on the workpiece W.

It is to be noted that In this respect, the dross means a mass having an irregular shape (in other words, a mass having a random shape) formed by solidification of a material (more specifically, a metal material) that has been melted by the irradiation of the laser beam.

The group of transportation plates 3 includes: the first transportation plate 3-1, which extends in the first direction DR1; and the second transportation plate 3-2, which extends in the first direction DR1. Each transportation plate 3 in the group of transportation plates 3 is an elongated plate with the first direction DR1 as its longitudinal direction. In an example illustrated in FIG. 2, the second transportation plate 3-2 is disposed to be adjacent to the first transportation plate 3-1.

In the example illustrated in FIG. 2, the laser beam LB, which passes through the workpiece W, reaches the dross transportation conveyor 2A. As illustrated in FIG. 3, when the laser beam LB reaches the transportation plate 3, the transportation plate 3 is thermally deformed. The transportation plate 3 is designed to prevent excessive deflection, and is also sufficiently resistant to thermal deformation. In particular, the transportation plate 3 having a shape as illustrated in FIG. 3 is high in bending rigidity, and is hardly deflected. However, when the output of the laser beam LB is further increased or the energy density of the laser beam LB is further increased, even the transportation plate 3 having the shape as illustrated in FIG. 3 may become excessive in thermal deformation. In addition, when the thermal deformation of the transportation plate 3 becomes excessive, a smooth movement of the group of the transportation plates 3 may be hindered.

As illustrated in FIG. 2, the dross transportation conveyor 2A according to the first embodiment includes: the first protection component 4-1, which covers at least partially the first transportation surface 3u-1 of the first transportation plate 3-1; and a second protection component 4-2, which covers at least partially the second transportation surface 3u-2 of the second transportation plate 3-2. The first protection component 4-1 prevents the laser beam LB from reaching the first transportation plate 3-1, and the second protection component 4-2 prevents the laser beam LB from reaching the second transportation plate 3-2. As one example, in the example illustrated in FIG. 2, the first protection component 4-1 has a shape that is less likely to be thermally deformed than the first transportation plate 3-1, and is more resistant to the thermal deformation than the first transportation plate 3-1. Further, as an example, in the example illustrated in FIG. 2, the second protection component 4-2 has a shape that is less likely to be thermally deformed than the second transportation plate 3-2, and is more resistant to the thermal deformation.

In the dross transportation conveyor 2A according to the first embodiment, the laser beam LB reaching each the first transportation plate 3-1 and the second transportation plate 3-2 is prevented, and thus the thermal deformation of each the first transportation plate 3-1 and the second transportation plate 3-2 is prevented. In addition, deflection of each the first transportation plate 3-1 and the second transportation plate 3-2 due to the thermal deformation is prevented. In this manner, it becomes possible to smoothly move the group of the transportation plates 3 including the first transportation plate 3-1 and the second transportation plate 3-2.

Further, in the dross transportation conveyor 2A according to the first embodiment, the first protection component 4-1 and the second protection component 4-2 are respectively disposed on the first transportation plate 3-1 and the second transportation plate 3-2, and thus a relative movement of the first transportation plate 3-1 with respect to the second transportation plate 3-2 (for example, a relative movement when each transportation plate 3 illustrated in FIG. 10 turns around) is not hindered by the addition of the protection component 4.

As illustrated in FIG. 1, the laser beam machine apparatus 1A according to the first embodiment includes: the above-described dross transportation conveyor 2A; the laser beam irradiator 60 including a laser head 61, which irradiates the workpiece W with the laser beam LB; a mover 7, which moves the laser head 61 relative to a workpiece support component 90 for supporting the workpiece W; and a controller 8, which controls the laser beam irradiator 60 and the mover 7. It is to be noted that one computer may function as the controller 8, or a plurality of computers may cooperate with each other to function as the controller 8.

The laser beam machine apparatus 1A according to the first embodiment has the same effects as those of the dross transportation conveyor 2A according to the first embodiment.

### (Optional and Additional Configurations)

Subsequently, with reference to FIGs. 1 to 40, optional and additional configurations that are adoptable in the dross transportation conveyor 2A and the laser beam machine apparatus 1A according to the first embodiment (or a dross transportation conveyor 2B and a laser beam machine apparatus 1B according to a second embodiment to be described later) will be described.

In the example illustrated in FIG. 1, the dross transportation conveyor 2A is partially disposed immediately below the laser beam irradiator 60. In addition, the group of transportation plates 3 of the dross transportation conveyor 2A is configured to be movable across the machine region RG1 (more specifically, a region immediately below the laser beam irradiator 60).

In the example illustrated in FIG. 1, the group of transportation plates 3 transports the dross from the machine region RG1 to a discharge region RG2. In the example illustrated in FIG. 1, each transportation plate 3 in the group of transportation plates 3 is reversed (more specifically, makes a turn by 180 degrees around a horizontal shaft) in the discharge region RG2. As a result, the dross D transported by the group of transportation plates 3 is discharged from the group of transportation plates 3 in the discharge region RG2. It is to be noted that when the cut-off pieces CF (see FIG. 2) are transported by the group of transportation plates 3, the cut-off pieces CF are also discharged from the group of transportation plates 3 in the discharge region RG2.

In an example illustrated in FIG. 4, the dross transportation conveyor 2A includes: a first endless component 21; a second endless component 22; and a driver 29. The first endless component 21 and the second endless component 22 support the group of transportation plates 3. More specifically, the group of transportation plates 3 is attached to the first endless component 21 and the second endless component 22.

The first endless component 21 and the second endless component 22 are directly or indirectly driven by the driver 29. More specifically, the first endless component 21 is driven to move along a first circling orbit B1 (see FIG. 5) directly or indirectly by the driver 29, and the second endless component 22 is driven to move along a second circling orbit B2 (see FIG. 5), which is parallel to the first circling orbit B1, directly or indirectly by the driver 29. A gap G1 between the first circling orbit B1 and the second circling orbit B2 (in other words, a distance between the first circling orbit B1 and the second circling orbit B2 in a direction along the first direction DR1) is, for example, equal to or longer than one meter and equal to or shorter than three meters.

In an example illustrated in FIG. 6, the first endless component 21 is a first endless chain 21a, and the second endless component 22 is a second endless chain 22a. In the example illustrated in FIG. 6, the dross transportation conveyor 2 includes a plurality of sprockets 28, which includes a first sprocket 28a, a second sprocket 28b, a third sprocket 28c, and a fourth sprocket 28d. The first endless chain 21a is engaged with at least the first sprocket 28a and the second sprocket 28b (more specifically, the first endless chain 21a is wound around at least the first sprocket 28a and the second sprocket 28b). In addition, the second endless chain 22a is engaged with at least the third sprocket 28c and the fourth sprocket 28d (more specifically, the second endless chain 22a is wound around at least the third sprocket 28c and the fourth sprocket 28d).

In the example illustrated in FIG. 6, the first endless chain 21a is driven by the driver 29 via at least the first sprocket 28a, and the second endless chain 22a is driven by the driver 29 via at least the third sprocket 28c.

The group of transportation plates 3 moves along the circling orbit OB. As illustrated in FIG. 5, the circling orbit OB of the group of transportation plates 3 is parallel to the first circling orbit B1 of the first endless chain 21a, and is parallel to the second circling orbit B2 of the second endless chain 22a.

### (Group of Transportation Plates 3)

Each transportation plate 3 in the group of transportation plates 3 transports some of a plurality of pieces of dross D, which are generated by the irradiation of the laser beam LB on the workpiece W, and the temperature of each transportation plate 3 is raised by the laser beam LB. For example, the first transportation plate 3-1 and the second transportation plate 3-2 each transport some of the plurality of pieces of dross D, which are generated by the irradiation of the laser beam LB on the workpiece W, and the temperature of each transportation plate 3 is raised by the laser beam LB. Each transportation plate 3 in the group of transportation plates 3 may be made up of one component, or may be made up of an assembly of a plurality of components.

In an example illustrated in FIG. 7, the dross transportation conveyor 2A include the group of transportation plates 3, which includes the first transportation plate 3-1, the second transportation plate 3-2, and the third transportation plate 3-3. Each transportation plate 3 in the group of transportation plates 3 extends along the first direction DR1. The number of the transportation plates 3 included in the group of transportation plates 3 is, for example, equal to or larger than 20, equal to or larger than 50, or equal to or larger than 80. In this respect, "N" is defined as the number of the transportation plates 3 included in the group of transportation plates 3. "N" is, for example, a natural number equal to or larger than 20.

In a case where "K" is defined as any natural number equal to or larger than 1 and equal to or smaller than "N-1", the (K+1)-th transportation plate is disposed to be adjacent to the K-th transportation plate. In addition, the first transportation plate 3-1 is disposed to be adjacent to the N-th transportation plate. In this manner, the group of transportation plates 3 is disposed in an annular shape as a whole. For example, the second transportation plate 3-2 is disposed to be adjacent to the first transportation plate 3-1, and is also disposed to be adjacent to the third transportation plate 3-3.

Each transportation plate 3 in the group of transportation plates 3 includes: a front end portion 3f; a rear end portion 3e; and a middle portion 3m, which is disposed between the front end portion 3f and the rear end portion 3e. It is to be noted that in an example illustrated in FIG. 7, the front end portion 3f of each transportation plate 3 is a front end portion in the moving direction (in other words, an end portion in the second direction DR2), and the rear end portion 3e of each transportation plate 3 is a rear end portion in the moving direction (in other words, an end portion opposite to the second direction DR2).

As illustrated in FIG. 8, each transportation plate 3 in the group of transportation plates 3 includes a left end portion 3a and a right end portion 3b. In an example illustrated in FIG. 8, the left end portion 3a of each transportation plate 3 is an end portion on the left, when the transportation surface 3u of the transportation plate 3 is viewed in a direction from the rear end portion 3e to the front end portion 3f, and the right end portion 3b of each transportation plate 3 is an end portion on the right, when the transportation surface 3u of the transportation plate 3 is viewed in the direction from the rear end portion 3e to the front end portion 3f.

The first transportation plate 3-1 includes: a front end portion (hereinafter, referred to as a "first front end portion 3f-1"); a rear end portion (hereinafter, referred to as a "first rear end portion 3e-1"); a middle portion (hereinafter, referred to as a "first middle portion 3m-1"), which is disposed between the first front end portion 3f-1 and the first rear end portion 3e-1; a left end portion 3a-1, and a right end portion 3b-1.

The second transportation plate 3-2 includes: a front end portion (hereinafter, referred to as a "second front end portion 3f-2"); a rear end portion (hereinafter, referred to as a "second rear end portion 3e-2"); a middle portion (hereinafter, referred to as a "second middle portion 3m-2"), which is disposed between the second front end portion 3f-2 and the second rear end portion 3e-2; a left end portion 3a-2; and a right end portion 3b-2.

The third transportation plate 3-3 includes: a front end portion (hereinafter, referred to as a "third front end portion 3f-3"); a rear end portion (hereinafter, referred to as a "third rear end portion 3e-3"); a middle portion (hereinafter, referred to as a "third middle portion 3m-3"), which is disposed between the third front end portion 3f-3 and the third rear end portion 3e-3; a left end portion 3a-3; and a right end portion 3b-3.

In the example illustrated in FIG. 7, the front end portion 3f of each transportation plate 3 is disposed to overlap the rear end portion 3e of another transportation plate disposed to be adjacent in a plane view (in other words, when viewed in a direction opposite to the third direction DR3), and the rear end portion 3e of each transportation plate 3 is disposed to overlap the front end portion 3f of another transportation plate disposed to be adjacent in the plane view (in other words, when viewed in the direction opposite to the third direction DR3).

For example, the first front end portion 3f-1 of the first transportation plate 3-1 is disposed to overlap a rear end portion of another transportation plate 3-N in a plan view (in other words, when viewed in the direction opposite to the third direction DR3). More specifically, the rear end portion of another transportation plate 3-N is covered with the first front end portion 3f-1 of the first transportation plate 3-1. Further, the first rear end portion 3e-1 of the first transportation plate 3-1 is disposed to overlap the second front end portion 3f-2 of the second transportation plate 3-2 in the plan view. More specifically, the first rear end portion 3e-1 of the first transportation plate 3-1 is covered with the second front end portion 3f-2 of the second transportation plate 3-2. Furthermore, the second rear end portion 3e-2 of the second transportation plate 3-2 is disposed to overlap the third front end portion 3f-3 of the third transportation plate 3-3 in the plan view (in other words, when viewed in the direction opposite to the third direction DR3). More specifically, the second rear end portion 3e-2 of the second transportation plate 3-2 is covered with the third front end portion 3f-3 of the third transportation plate 3-3.

The length (more specifically, the length in a direction along the first direction DR1) of each transportation plate 3 in the group of transportation plates 3 is, for example, equal to or longer than one meter and equal to or shorter than three meters. A length L1 (see FIG. 8) of the first transportation plate 3-1 is, for example, equal to or longer than one meter and equal to or shorter than three meters, and the length of the second transportation plate 3-2 is, for example, equal to or longer than one meter and equal to or shorter than three meters.

The width of each transportation plate 3 in the group of transportation plates 3 (more specifically, the width of each transportation plate 3 in the group of transportation plates 3 in a direction along the second direction DR2) is, for example, equal to or larger than four centimeters and equal to or smaller than 20 centimeters. For example, a width W1 of the first transportation plate 3-1 is, for example, equal to or larger than four centimeters and equal to or smaller than 20 centimeters, and the width of the second transportation plate 3-2 is, for example, equal to or larger than four centimeters and equal to or smaller than 20 centimeters.

The plate thickness of each transportation plate 3 in the group of transportation plates 3 is for example, equal to or smaller than 10 millimeters, or equal to or smaller than five millimeters.

Each transportation plate 3 in the group of transportation plates 3 is made of metal. Each transportation plate 3 in the group of transportation plates 3 is made of, for example, steel, more specifically, a hot-rolled mild steel plate, a cold-rolled steel plate, or a cold-rolled stainless steel plate.

The left end portion 3a of each transportation plate 3 in the group of transportation plates 3 is attached to the first endless component 21 (more specifically, the first endless chain 21a). In addition, the right end portion 3b of each transportation plate 3 in the group of transportation plates 3 is attached to the second endless component 22 (more specifically, the second endless chain 22a).

In the example illustrated in FIG. 8, a hole portion h1 into which a bolt is insertable is formed in the left end portion 3a-1 of the first transportation plate 3-1, and a hole portion h2 into which a bolt is insertable is formed in the right end portion 3b-1 of the first transportation plate 3-1. In an example illustrated in FIG. 9, the left end portion 3a-1 of the first transportation plate 3-1 is attached to the first endless chain 21a via a bolt BT, and the right end portion 3b-1 of the first transportation plate 3-1 is attached to the second endless chain 22a via a bolt BT. As can be understood from FIGs. 7 and 8, the first transportation plate 3-1 is not coupled to another adjacent transportation plate. Therefore, when the first transportation plate 3-1 is damaged, the first transportation plate 3-1 can be easily replaced with a new first transportation plate.

In the example illustrated in FIG. 7, the front end portion 3f of each transportation plate 3 in the group of transportation plates 3 includes a curved portion CP (more specifically, an arc-shaped portion), which is convex in the third direction DR3. It is to be noted that in the first embodiment, the shape of the front end portion 3f of each transportation plate 3 in the group of transportation plates 3 is not limited to the example illustrated in FIG. 7.

In the example illustrated in FIG. 7, the rear end portion 3e of each transportation plate 3 in the group of transportation plates 3 includes an upright portion TP, which projects in the third direction DR3. As illustrated in FIG. 10, the upright portion TP scrapes out the dross D under the curved portion CP of its subsequent transportation plate, when each transportation plate 3 turns around. For example, a first upright portion TP1 of the first transportation plate 3-1 scrapes out the dross D under the second curved portion CP2 of the second transportation plate 3-2, when the first transportation plate 3-1 turns around. It is to be noted that in the first embodiment, the shape of the rear end portion 3e of each transportation plate 3 in the group of transportation plates 3 is not limited to the example illustrated in FIG. 7.

In the example illustrated in FIG. 7, each transportation plate 3 in the group of transportation plates 3 includes the middle portion 3m, which connects the curved portion CP with the upright portion TP. The curved portion CP and the middle portion 3m are connected with each other through a bent portion BA, and the upright portion TP and the middle portion 3m are connected with each other through a bent portion BB.

In the group of transportation plates 3, the first transportation plate 3-1 and the second transportation plate 3-2 will be representatively described.

In the example illustrated in FIG. 8, the first transportation plate 3-1 includes: the first front end portion 3f-1; the first rear end portion 3e-1; and the first middle portion 3m-1, which is disposed between the first front end portion 3f-1 and the first rear end portion 3e-1.

The first front end portion 3f-1 of the first transportation plate 3-1 includes a first curved portion CP1 (more specifically, a first arc-shaped portion) that is convex in the third direction DR3. The first curved portion CP1 extends in the first direction DR1.

The first rear end portion 3e-1 of the first transportation plate 3-1 includes the first upright portion TP1, which projects in the third direction DR3. The first upright portion TP1 extends in the first direction DR1.

The first middle portion 3m-1 of the first transportation plate 3-1 includes a first flat portion FP1. The first flat portion FP1 extends in the first direction DR1.

The first curved portion CP1 and the first middle portion 3m-1 are connected with each other through a bent portion BA1, which extends in the first direction DR1, and the first upright portion TP1 and the first middle portion 3m-1 are connected with each other through a bent portion BB1, which extends in the first direction DR1.

In an example illustrated in FIG. 8, the second transportation plate 3-2 includes: the second front end portion 3f-2; the second rear end portion 3e-2; and the second middle portion 3m-2, which is disposed between the second front end portion 3f-2 and the second rear end portion 3e-2.

The second front end portion 3f-2 of the second transportation plate 3-2 includes a second curved portion CP2 (more specifically, a second arc-shaped portion), which is convex in the third direction DR3. The second curved portion CP2 extends in the first direction DR1.

The second rear end portion 3e-2 of the second transportation plate 3-2 include a second upright portion TP2, which projects in the third direction DR3. The second upright portion TP2 extends in the first direction DR1.

The second middle portion 3m-2 of the second transportation plate 3-2 includes a second flat portion FP2. The second flat portion FP2 extends in the first direction DR1.

The second curved portion CP2 and the second middle portion 3m-2 are connected with each other through a bent portion BA2, which extends in the first direction DR1, and the second upright portion TP2 and the second middle portion 3m-2 are connected with each other through a bent portion BB2, which extends in the first direction DR1.

### (Plurality of Protection Components 4)

As illustrated in FIG. 7, the dross transportation conveyor 2A includes a plurality of protection components 4. Each of the plurality of protection components 4 covers at least partially the transportation surface of its corresponding transportation plate 3, and prevents the laser beam LB from reaching the transportation plate 3. Each of the plurality of protection components 4 extends along the first direction DR1.

More specifically, the dross transportation conveyor 2A includes the plurality of protection components 4, which include the first protection component 4-1, the second protection component 4-2, and the third protection component 4-3. The first protection component 4-1 covers at least partially the transportation surface (that is, the first transportation surface 3u-1) of the first transportation plate 3-1, and prevents the laser beam LB from reaching the first transportation plate 3-1. The first protection component 4-1 extends along the first direction DR1. The first protection component 4-1 is directly or indirectly attached to the first transportation plate 3-1.

The second protection component 4-2 covers at least partially the transportation surface (that is, the second transportation surface 3u-2) of the second transportation plate 3-2, and prevents the laser beam LB from reaching the second transportation plate 3-2. The second protection component 4-2 extends along the first direction DR1. The second protection component 4-2 is directly or indirectly attached to the second transportation plate 3-2.

The third protection component 4-3 covers at least partially the transportation surface (that is, a third transportation surface 3u-3) of the third transportation plate 3-3, and prevents the laser beam LB from reaching the third transportation plate 3-3. The third protection component 4-3 extends along the first direction DR1. The third protection component 4-3 is directly or indirectly attached to the third transportation plate 3-3.

Each of the plurality of protection components 4 is made of metal. Each of the plurality of protection components 4 is made of, for example, steel. Each of the plurality of protection components 4 is made up of, for example, a rolled steel plate (more specifically, a hot-rolled steel plate). The material of each of the plurality of protection components 4 may be the same with the material of each transportation plate 3 in the group of transportation plates 3, or may be different from the material of each transportation plate 3 in the group of transportation plates 3. Each of the plurality of protection components 4 may have a single-layer structure or a multilayer structure.

Each of the plurality of protection components 4 may be attached to its corresponding transportation plate 3 via an attachment component such as a bolt BT (see FIG. 27, if necessary) or a bracket. Alternatively, each of the plurality of protection components 4 may be attached to its corresponding transportation plate 3 by welding.

In an example illustrated in FIG. 11, the first protection component 4-1 is attached to the first transportation plate 3-1 by welding (more specifically, by spot welding). FIG. 11 illustrates welded portions J1 where the first protection component 4-1 and the first transportation plate 3-1 are welded together. The first protection component 4-1 may be welded with the first transportation plate 3-1 at least in both end regions in the longitudinal direction of the first transportation plate 3-1 and a central region in the longitudinal direction of the first transportation plate 3-1.

In a case where the first protection component 4-1 is welded with the first transportation plate 3-1, no problem will arise, even though the welded portion J1 is irradiated with the laser beam LB. In addition, the degree of freedom is high with regard to the bonding region between the first transportation plate 3-1 and the first protection component 4-1. For example, as illustrated in FIG. 11, in the case where the first protection component 4-1 is welded with the first transportation plate 3-1 in the central region in the longitudinal direction of the first transportation plate 3-1, the first protection component 4-1 is hardly separated in a direction away from the first transportation plate 3-1. Further, in the case where the first protection component 4-1 is welded with the first transportation plate 3-1, an increase in the number of components is prevented, and the attachment cost is reduced.

In the example illustrated in FIG. 11, the first protection component 4-1 is spot welded with the first transportation plate 3-1, but the first protection component 4-1 may be linearly welded with the first transportation plate 3-1. For example, a front edge of the first protection component 4-1 and a rear edge of the first protection component 4-1 each may be linearly welded with the first transportation plate 3-1 (see FIG. 22, if necessary).

In a case of spot welding, heat transfer from the first protection component 4-1 to the first transportation plate 3-1 is prevented, as compared with linear welding, and in addition, the heat is dissipated by the first protection component 4-1, and thus the first transportation plate 3-1 is hardly deformed thermally. The first protection component 4-1 may be spot welded with the first transportation plate 3-1 at three or more points. In a case where the spot welding is performed at three or more points, the first protection component 4-1 is hardly separated in the direction away from the first transportation plate 3-1.

Hereinafter, several examples of the protection components 4 will be described, but the protection components 4 are not limited to the several examples to be described below. In addition, among the plurality of protection components 4, the first protection component 4-1 and the second protection component 4-2 will be representatively described, but it is needless to say that the same configuration with the first protection component 4-1 is applicable to the other protection components.

### (First Example of Protection Components 4)

In the example illustrated in FIG. 11, the first protection component 4-1 includes: a first plate portion 41-1; a second plate portion 42-1; and a first bent portion 43-1, which is disposed between the first plate portion 41-1 and the second plate portion 42-1, and which extends in the first direction DR1.

In a case where the first protection component 4-1 includes two plate portions and the bent portion disposed between the two plate portions, a cross-sectional secondary moment of the first protection component 4-1 increases. Thus, the first protection component 4-1 is hardly deflected. In addition, the plate thickness of the first protection component 4-1 can be made relatively thin.

In an example illustrated in FIG. 12, the first plate portion 41-1 is disposed in contact with the first transportation plate 3-1. The first plate portion 41-1 may be in surface contact with the first middle portion 3m-1 of the first transportation plate 3-1 (more specifically, the first flat portion FP1 of the first transportation plate 3-1).

In an example illustrated in FIG. 12, the second plate portion 42-1 is disposed to rise in the direction away from the first transportation plate 3-1. The second plate portion 42-1 rises from the first plate portion 41-1 in the third direction DR3. In the example illustrated in FIG. 12, the angle between the first plate portion 41-1 and the second plate portion 42-1 is 90 degrees. Alternatively, the angle between the first plate portion 41-1 and the second plate portion 42-1 may be any angle other than 90 degrees (for example, a predetermined angle equal to or larger than 60 degrees and equal to or smaller than 120 degrees). In the example illustrated in FIG. 12, the first protection component 4-1 has a substantially letter L shape in a cross-section perpendicular to the first direction DR1.

In the example illustrated in FIG. 12, in a state in which the dross support surface S1 of the first protection component 4-1 faces upward, the height of an upper end E1 of the first protection component 4-1 (more specifically, the height of the upper end E1 of the second plate portion 42-1) is higher than the height of an upper end E2 of the first upright portion TP1 of the first transportation plate 3-1.

In the example illustrated in FIG. 12, in the state in which the dross support surface S1 of the first protection component 4-1 faces upward, the height of the upper end E1 of the first protection component 4-1 (more specifically, the height of the upper end E1 of the second plate portion 42-1) is higher than the height of an upper end E3 of the first curved portion CP1 of the first transportation plate 3-1. Alternatively, in the state in which the dross support surface S1 of the first protection component 4-1 faces upward, the height of the upper end E1 of the first protection component 4-1 may be lower than the height of the upper end E3 of the first curved portion CP1 of the first transportation plate 3-1.

In the example illustrated in FIG. 12, in the state in which the dross support surface S1 of the first protection component 4-1 faces upward, the rear end portion of the first protection component 4-1 does not overlap the second curved portion CP2 of the second transportation plate 3-2 in a plan view (in other words, when viewed in a direction opposite to the third direction DR3). Alternatively, as illustrated in FIG. 2, in the state in which the dross support surface S1 of the first protection component 4-1 faces upward, the rear end portion EP of the first protection component 4-1 may overlap the second curved portion CP2 of the second transportation plate 3-2 in the plan view (in other words, when viewed in the direction opposite to the third direction DR3).

In the example illustrated in FIG. 12, the plate thickness of the first protection component 4-1 (for example, the plate thickness of the first plate portion 41-1) is smaller than the plate thickness of the first transportation plate 3-1. Alternatively, as illustrated in FIG. 2, the plate thickness of the first protection component 4-1 may be the same as the plate thickness of the first transportation plate 3-1.

In the example illustrated in FIG. 11, the second protection component 4-2 includes: a third plate portion 41-2; a fourth plate portion 42-2; and a second bent portion 43-2, which is disposed between the third plate portion 41-2 and the fourth plate portion 42-2, and which extends in the first direction DR1.

In the example illustrated in FIG. 12, the third plate portion 41-2 is disposed in contact with the second transportation plate 3-2. The third plate portion 41-2 may be in surface contact with the second middle portion 3m-2 of the second transportation plate 3-2 (more specifically, the second flat portion FP2 of the second transportation plate 3-2).

In the example illustrated in FIG. 12, the fourth plate portion 42-2 is disposed to rise in a direction away from the second transportation plate 3-2. The fourth plate portion 42-2 rises from the third plate portion 41-2 in the third direction DR3. In the example illustrated in FIG. 12, the second protection component 4-2 has a substantially letter L shape in a cross-section perpendicular to the first direction DR1. The shape and the size of the second protection component 4-2 are, for example, the same as the shape and the size of the first protection component 4-1.

In the example illustrated in FIG. 12, a first reception space SP1, which receives the dross D, is formed between the second plate portion 42-1 of the first protection component 4-1 and the fourth plate portion 42-2 of the second protection component 4-2. In order to facilitate understanding of the shape of the first reception space SP1, the first reception space SP1 is hatched with dots in FIG. 12.

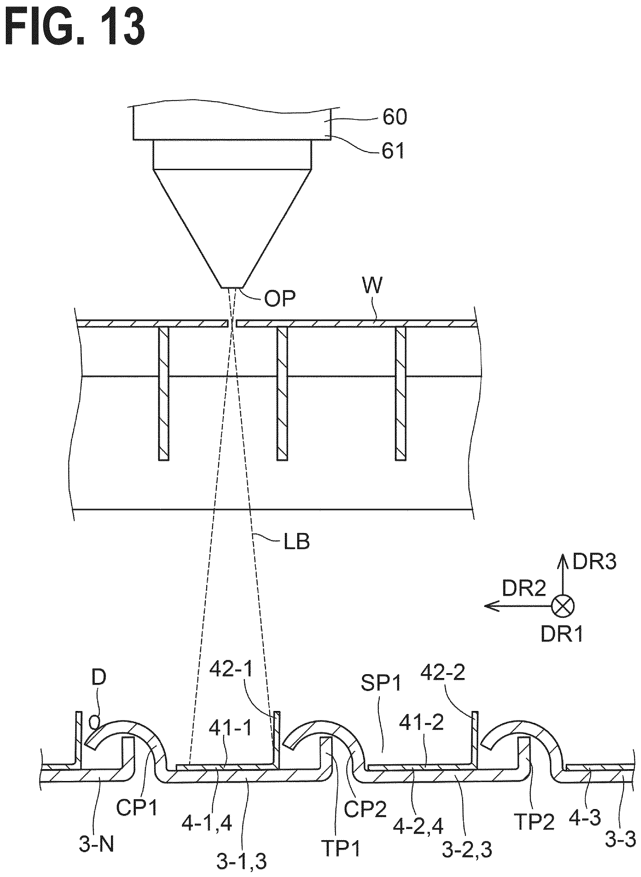

In the example illustrated in FIG. 12, the second plate portion 42-1 is connected with a front end portion (in other words, an end portion in the second direction DR2) of the first plate portion 41-1. Alternatively, as illustrated in FIG. 13, the second plate portion 42-1 may be connected with a rear end portion (in other words, an end portion in an opposite direction to the second direction DR2) of the first plate portion 41-1.

Further alternatively, the second plate portion 42-1 may be connected with a middle portion of the first plate portion 41-1. In other words, the second plate portion 42-1 and the first plate portion 41-1 may be connected with each other in a letter T shape.

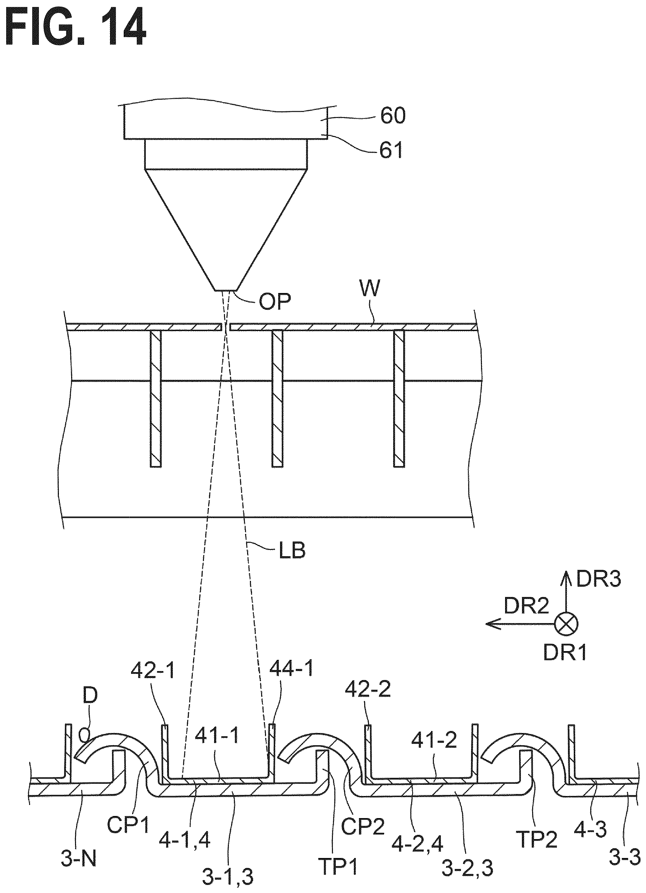

Further alternatively, as illustrated in FIG. 14, the first protection component 4-1 may include a rear plate portion 44-1, which is connected with a rear end portion of the first plate portion 41-1, in addition to the second plate portion 42-1, which is connected with the front end portion of the first plate portion 41-1. The rear plate portion 44-1 is disposed to rise in the direction away from the first transportation plate 3-1. In an example illustrated in FIG. 14, the first protection component 4-1 has a substantially letter U shape in a cross-section perpendicular to the first direction DR1.

In the example illustrated in FIG. 12, the protection component 4 covers at least partially the transportation surface of its corresponding transportation plate 3. In this manner, heat input into the transportation plate 3 due to irradiation of the laser beam is prevented, and thermal deformation and deflection of the transportation plate 3 are prevented. The protection component 4 also includes at least two plate portions and a bent portion disposed between the two plate portions. Thus, the rigidity of the protection component 4 prevents the thermal deformation of the transportation plate and the thermal deformation of the protection component itself.

### (Second Example of Protection Components 4)

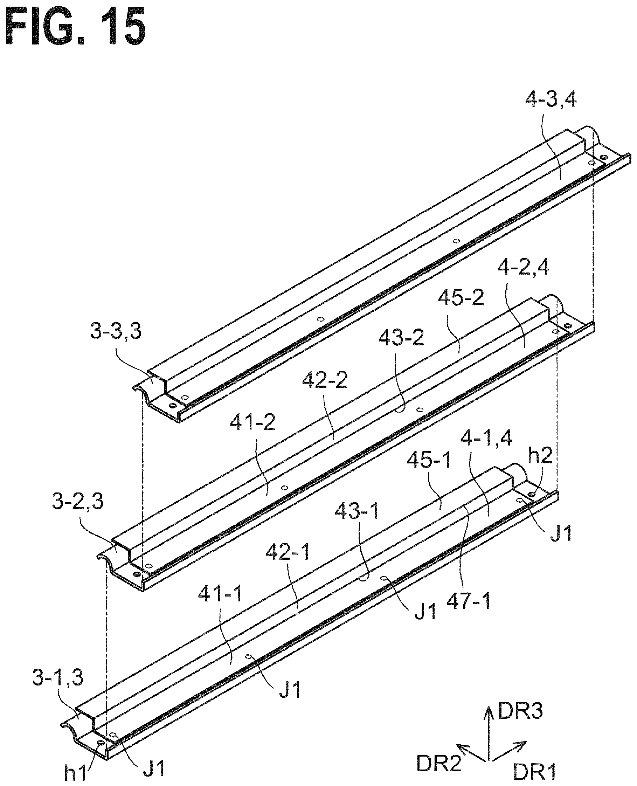

An example illustrated in FIG. 15 is different from the example illustrated in FIG. 11 in that the first protection component 4-1 includes a first cover portion 45-1, in addition to the first plate portion 41-1, the second plate portion 42-1, and the first bent portion 43-1. In other respects, the second example of the protection components 4 is the same as the first example of the protection components 4.

In an example illustrated in FIG. 16, the first cover portion 45-1 covers at least partially the first front end portion 3f-1 (more specifically, the first curved portion CP1) of the first transportation plate 3-1. In the example illustrated in FIG. 16, in the state in which the dross support surface S1 of the first protection component 4-1 faces upward, the first cover portion 45-1 is disposed immediately above the first front end portion 3f-1 (more specifically, the first curved portion CP1) of the first transportation plate 3-1.

In the example illustrated in FIG. 16, the first cover portion 45-1 covers the entirety of the first curved portion CP1 of the first transportation plate 3-1. Alternatively, the first cover portion 45-1 may cover only partially the first curved portion CP1 of the first transportation plate 3-1.

In the example illustrated in FIG. 15, the first cover portion 45-1 is connected with the second plate portion 42-1 through a bent portion 47-1, which extends in the first direction DR1.

In the example illustrated in FIG. 16, the first cover portion 45-1 has a linear shape when viewed in a direction along the first direction DR1. Alternatively, the first cover portion 45-1 may have a curved shape when viewed in the direction along the first direction DR1. In the example illustrated in FIG. 16, the angle between the first cover portion 45-1 and the second plate portion 42-1 is 90 degrees. Alternatively, the angle between the first cover portion 45-1 and the second plate portion 42-1 may be any angle other than 90 degrees (for example, a predetermined angle equal to or larger than 60 degrees and equal to or smaller than 120 degrees).

In the example illustrated in FIG. 15, the second protection component 4-2 includes a second cover portion 45-2, in addition to the third plate portion 41-2, the fourth plate portion 42-2, and the second bent portion 43-2. In the example illustrated in FIG. 16, the second cover portion 45-2 covers at least partially the second front end portion 3f-2 of the second transportation plate 3-2 (more specifically, at least partially the second curved portion CP2).

In the example illustrated in FIG. 16, the first cover portion 45-1 covers at least partially the first front end portion 3f-1 (more specifically, the first curved portion CP1) of the first transportation plate 3-1. Alternatively, as illustrated in FIG. 17, the first cover portion 45-1 may cover at least partially the second front end portion 3f-2 (more specifically, the second curved portion CP2) of the second transportation plate 3-2.

In a case where the protection component 4 includes a cover portion that covers at least partially the front end portion of its corresponding transportation plate 3 or at least partially the front end portion of its subsequent transportation plate 3, heat input into the transportation plate 3 due to the irradiation of the laser beam is further prevented, and thermal deformation and deflection of the transportation plate 3 are further prevented.

### (Third Example of Protection Components 4)

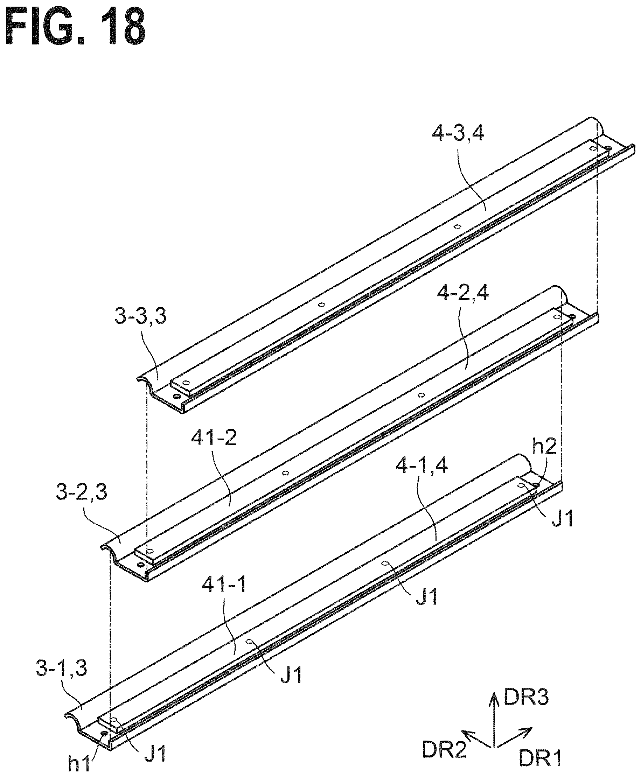

In a third example of the protection components 4 illustrated in FIGs. 18 and 19, the bent portion that extends in the first direction DR1 is omitted in each protection component 4, and the plate thickness of each protection component 4 is relatively large. In other respects, the third example of the protection components 4 is the same as the first example of the protection components 4.

In an example illustrated in FIG. 18, the first protection component 4-1 and the second protection component 4-2 are each a thick flat plate. The plate thickness of the first protection component 4-1 (more specifically, the plate thickness of the first plate portion 41-1) is equal to or larger than 3. 2 millimeters. In addition, the plate thickness of the second protection component 4-2 is equal to or larger than 3. 2 millimeters.

The plate thickness of the first protection component 4-1 may be larger than the plate thickness of the first transportation plate 3-1, or may be the same as the plate thickness of the first transportation plate 3-1. The plate thickness of the second protection component 4-2 may be larger than the plate thickness of the second transportation plate 3-2, or may be the same as the plate thickness of the second transportation plate 3-2.

In an example illustrated in FIG. 19, each protection component 4 in a cross-section perpendicular to the first direction DR1 has a substantially rectangular shape.

In a case where the plate thickness of each of the plurality of protection components 4 is sufficiently large, the cross-sectional secondary moment of each of the plurality of protection components 4 becomes large. Thus, each of the plurality of protection components 4 is hardly deflected.

### (Fourth Example of Protection Components 4)

In an example illustrated in FIG. 20, laser reflectivity on the dross support surface of each protection component 4 is higher than the laser reflectivity on the transportation surface 3u of each transportation plate 3. It is to be noted that in the first embodiment (or the second embodiment to be described later), the wavelength of the laser beam emitted from the laser beam irradiator 60 is, for example, equal to or longer than 1060 nanometers and equal to or shorter than 1080 nanometers.

In the example illustrated in FIG. 20, the laser reflectivity on the dross support surface S1 of the first protection component 4-1 is higher than the laser reflectivity on the first transportation surface 3u-1 of the first transportation plate 3-1. The laser reflectivity on the dross support surface S1 of the first protection component 4-1 with respect to a laser beam having a wavelength equal to or longer than 1060 nanometers and equal to or shorter than 1080 nanometers is, for example, equal to or higher than 70%, equal to or higher than 80%, or equal to or higher than 90%.

The first protection component 4-1 may include: a base material 48-1; and a laser beam reflection layer 49-1, which covers at least partially the base material 48-1. In the example illustrated in FIG. 20, the laser beam reflection layer 49-1 covers the surface at one end of the base material 48-1 in the third direction DR3. The laser beam reflection layer 49-1 is, for example, a metal layer. The material of the laser beam reflection layer 49-1 is, for example, copper.

In the example illustrated in FIG. 20, the first protection component 4-1 includes a laser beam reflection layer 49-1, which is made of a material (for example, copper) higher in laser reflectivity than the material that constitutes the first transportation plate 3-1. Alternatively, the entirety of the first protection component 4-1 may be made of a material higher in laser reflectivity than the material that constitutes the first transportation plate 3-1.

In the example illustrated in FIG. 20, the dross support surface S2 of the second protection component 4-2 is higher in laser reflectivity than the second transportation surface 3u-2 of the second transportation plate 3-2. The laser reflectivity on the dross support surface S2 of the second protection component 4-2 with respect to the laser beam having the wavelength equal to or longer than 1060 nanometers and equal to or shorter than 1080 nanometers is, for example, equal to or higher than 70%, equal to or higher than 80%, or equal to or higher than 90%.

The second protection component 4-2 may include: a base material 48-2; and a laser beam reflection layer 49-2 (for example, a copper layer), which covers at least partially the base material 48-2. Alternatively, the entirety of the second protection component 4-2 may be made of a material (for example, copper) higher in laser reflectivity than the material of the second transportation plate 3-2.

In the example illustrated in FIG. 20, the dross support surface of each of the plurality of protection components 4 effectively reflects the laser beam LB, which is emitted from the laser beam irradiator 60. In this manner, heat input into each transportation plate 3 is prevented, and thermal deformation and deflection of each transportation plate 3 are prevented. In addition, heat input into each protection component 4 is also prevented, and thermal deformation and deflection of each protection component 4 are prevented.

The mode in which the laser reflectivity on the dross support surface of each protection component 4 is made higher than the laser reflectivity on the transportation surface 3u of its corresponding transportation plate 3 is adoptable in the first example, the second example, and the third example of the protection components 4, as well as a fifth example, a sixth example, and a seventh example of the protection components 4 to be described later.

### (Fifth Example of Protection Components 4)

In an example illustrated in FIG. 21, a heat insulation material 46 is interposed between each protection component 4 and its corresponding transportation plate 3. For example, a heat insulation material 46-1 is interposed between the first protection component 4-1 and the first transportation plate 3-1, and a heat insulation material 46-2 is interposed between the second protection component 4-2 and the second transportation plate 3-2.

The heat insulation material 46-1 prevents transferring of heat to the first transportation plate 3-1 from the first protection component 4-1, the temperature of which is raised by the irradiation of the laser beam LB. In this manner, thermal deformation of the first transportation plate 3-1 is prevented, and deflection of the first transportation plate 3-1 due to the thermal deformation is prevented. The thermal conductivity of the heat insulation material 46-1 is lower than the thermal conductivity of the material that constitutes the first protection component 4-1. In addition, the thermal conductivity of the heat insulation material 46-1 is lower than the thermal conductivity of the material that constitutes the first transportation plate 3-1.

The heat insulation material 46-2 prevents transferring of heat to the second transportation plate 3-2 from the second protection component 4-2, the temperature of which is raised by the irradiation of the laser beam LB. In this manner, the thermal deformation of the second transportation plate 3-2 is prevented, and the deflection of the second transportation plate 3-2 due to the thermal deformation is prevented. The thermal conductivity of the heat insulation material 46-2 is lower than the thermal conductivity of the material that constitutes the second protection component 4-2. In addition, the thermal conductivity of the heat insulation material 46-2 is lower than the thermal conductivity of the material that constitutes the second transportation plate 3-2.

The mode in which the heat insulation material 46 is interposed between each protection component 4 and its corresponding transportation plate 3 is also adoptable in the first example, the second example, the third example, and the fourth example of the protection components 4 that have been described above, and the sixth example and the seventh example of the protection components 4 to be described below.

### (Sixth Example of Protection Components)

In an example illustrated in FIG. 22, an air layer AL is interposed between each protection component 4 and its corresponding transportation plate 3. For example, an air layer AL1 is interposed between the first protection component 4-1 and the first transportation plate 3-1, and an air layer AL2 is interposed between the second protection component 4-2 and the second transportation plate 3-2.

The air layer AL1 prevents transferring of heat to the first transportation plate 3-1 from the first protection component 4-1, the temperature of which is raised by the irradiation of the laser beam LB. In this manner, thermal deformation of the first transportation plate 3-1 is prevented, and deflection of the first transportation plate 3-1 due to the thermal deformation is prevented.

The air layer AL2 prevents transferring of heat to the second transportation plate 3-2 from the second protection component 4-2, the temperature of which is raised by the irradiation of the laser beam LB. In this manner, the thermal deformation of the second transportation plate 3-2 is prevented, and the deflection of the second transportation plate 3-2 due to the thermal deformation is prevented.

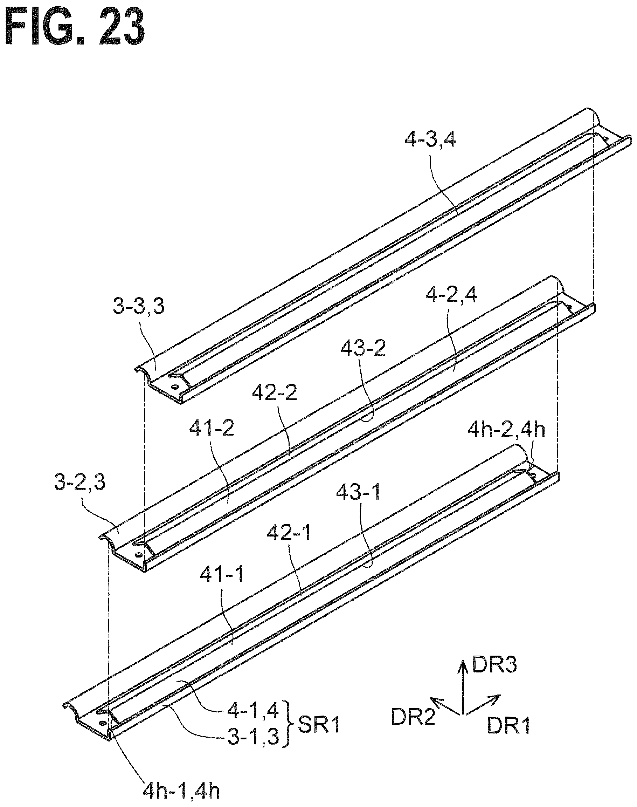

In the example illustrated in FIG. 22, the first protection component 4-1 includes: the first plate portion 41-1; the second plate portion 42-1; and the first bent portion 43-1, which is disposed between the first plate portion 41-1 and the second plate portion 42-1, and which extends in the first direction DR1. In an example illustrated in FIG. 23, a mountainous shape is defined by the first plate portion 41-1 and the second plate portion 42-1, and the first bent portion 43-1 defines a ridgeline of such a mountainous shape.

In the example illustrated in FIG. 22, the first plate portion 41-1 of the first protection component 4-1 is disposed in contact with the first transportation plate 3-1. In addition, the second plate portion 42-1 of the first protection component 4-1 is disposed in contact with the first transportation plate 3-1.

In the example illustrated in FIG. 22, the first protection component 4-1 is attached to the first transportation plate 3-1 by welding. More specifically, the first protection component 4-1 is attached to the first transportation plate 3-1 via the welded portion J1, which has a linear shape that extends along the first direction DR1.

In the example illustrated in FIG. 22, the first protection component 4-1 has a substantially letter V shape in a cross-section perpendicular to the first direction DR1. It is to be noted that an inverted letter V shape corresponds to a letter V shape, when viewed from a different direction. Thus, In this respect, the substantially inverted letter V shape is included in the substantially letter V shape.

In the example illustrated in FIG. 23, in a structure SR1 including the first transportation plate 3-1 and the first protection component 4-1, a plurality of openings 4h are provided to allow air to move between the outside of the structure SR1 and the air layer AL1, which is in the inside the structure SR1. In the example illustrated in FIG.23, a first opening 4h-1, which communicates the outside of the structure SR1 with the inside of the structure SR1, is provided at a first end portion (more specifically, a left end portion) of the structure SR1, and a second opening 4h-2, which communicates the outside of the structure SR1 with the inside of the structure SR1, is provided at a second end portion (more specifically, a right end portion) of the structure SR1.

In the example illustrated in FIG. 22, the air layer AL1 has a substantially triangular shape in a cross-section perpendicular to the first direction DR1. Alternatively, the air layer AL1 may have any shape other than the triangular shape in the cross-section perpendicular to the first direction DR1. For example, as illustrated in FIG. 24, the air layer AL1 may have a substantially rectangular shape in the cross-section perpendicular to the first direction DR1.

In an example illustrated in FIG. 24, the first protection component 4-1 includes: the first plate portion 41-1; the second plate portion 42-1; the first bent portion 43-1 between the first plate portion 41-1 and the second plate portion 42-1; and the rear plate portion 44-1, which is disposed to face the second plate portion 42-1. In addition, the first protection component 4-1 has a substantially letter C shape in a cross-section perpendicular to the first direction DR1.

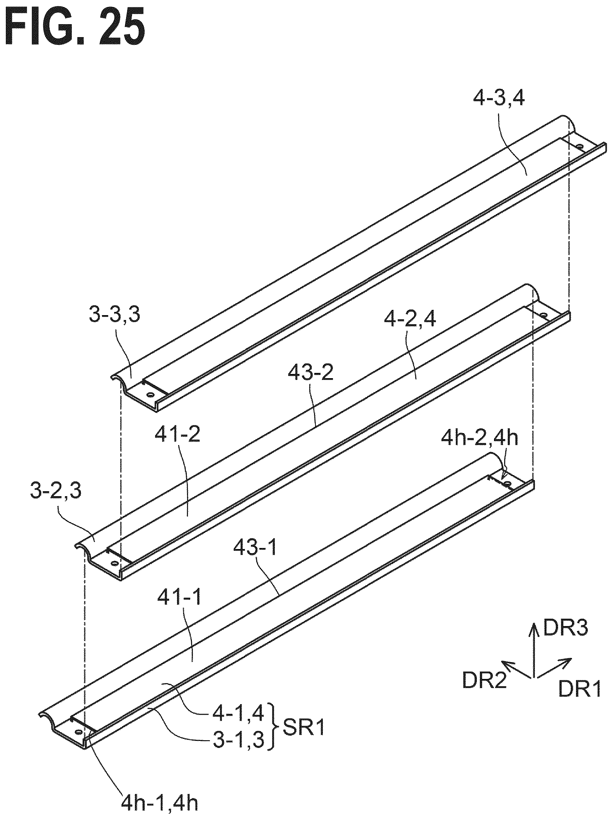

In an example illustrated in FIG. 25, in the structure SR1 including the first transportation plate 3-1 and the first protection component 4-1, a plurality of openings 4h are provided to allow air to move between the outside of the structure SR1 and the air layer AL1, which is in the inside of the structure SR1.

The mode in which the air layer AL is interposed between the protection component 4 and its corresponding transportation plate 3 is also adoptable in the first example, the second example, the third example, the fourth example, and the fifth example of the protection components 4 that have been described above and the seventh example of the protection components 4 to be described below.

### (Seventh Example of Protection Components 4)

In an example illustrated in FIG. 26, in response to the irradiation of the laser beam LB on each of the plurality of protection components 4, the protection component 4 is configured to be deflected in a direction away from its corresponding transportation plate 3.

For example, in response to the irradiation of the laser beam LB on the first protection component 4-1, the first protection component 4-1 (more specifically, a center portion 4m-1 in the longitudinal direction of the first protection component 4-1) is configured to be deflected in the direction away from the first transportation plate 3-1 (more specifically, in the third direction DR3). In addition, in response to the irradiation of the laser beam LB on the second protection component 4-2, the second protection component 4-2 (more specifically, a center portion 4m-2 in the longitudinal direction of the second protection component 4-2) is configured to be deflected in a direction away from the second transportation plate 3-2 (more specifically, in the third direction DR3).

In an example illustrated in FIG. 27, a first end portion 4a-1 (more specifically, a left end portion) of the first protection component 4-1 is fixed to the first transportation plate 3-1, and a second end portion 4b-1 (more specifically, a right end portion) of the first protection component 4-1 is fixed to the first transportation plate 3-1. The first end portion 4a-1 and the second end portion 4b-1 each may be fixed to the first transportation plate 3-1 with a fixing component such as a bolt, or may be fixed to the first transportation plate 3-1 by welding.

In the example illustrated in FIG. 26, the thickness of the first protection component 4-1 is set to a thickness to be easily deflected. Therefore, when the first protection component 4-1 is irradiated with the laser beam LB and is then thermally expanded, the first protection component 4-1 (more specifically, the center portion 4m-1 in the longitudinal direction of the first protection component 4-1) is deflected in the direction away from the first transportation plate 3-1. When the first protection component 4-1 is deflected in the direction away from the first transportation plate 3-1, an air layer AL1 is formed between the first protection component 4-1 and the first transportation plate 3-1. Such an air layer AL1 prevents transferring of heat to the first transportation plate 3-1 from the first protection component 4-1, the temperature of which is raised by the irradiation of the laser beam LB. In this manner, thermal deformation of the first transportation plate 3-1 is prevented, and deflection of the first transportation plate 3-1 due to the thermal deformation is prevented.

In examples illustrated in FIGs. 28 and 29, in response to the irradiation of the laser beam LB on the first protection component 4-1, a gap between the center portion 4m-1 in the longitudinal direction of the first protection component 4-1 and the center portion in the longitudinal direction of the first transportation plate 3-1 is configured to increase. More specifically in response to the irradiation of the laser beam LB on the first protection component 4-1, a state in which the center portion 4m-1 in the longitudinal direction of the first protection component 4-1 and the center portion in the longitudinal direction of the first transportation plate 3-1 are in contact with each other is changed to a state in which the center portion 4m-1 in the longitudinal direction of the first protection component 4-1 is separated from the center portion in the longitudinal direction of the first transportation plate 3-1. Such an increase of the gap (or such a change of the state) introduces air between the first protection component 4-1 and the first transportation plate 3-1. In this manner, transferring of heat from the first protection component 4-1 to the first transportation plate 3-1 is prevented, and heat dissipation from the first protection component 4-1 to the air is promoted.

In the example illustrated in FIG. 26, the first protection component 4-1 is made up of a thin plate. The second protection component 4-2 is also made up of a thin plate.

### (Lengths of Protection components 4)

The length of each of the plurality of protection components 4 in the direction along the first direction DR1 is shorter than the length of its corresponding transportation plate 3 in the direction along the first direction DR1. For example, the length of the first protection component 4-1 is shorter than the length of the first transportation plate 3-1, and the length of the second protection component 4-2 is shorter than the length of the second transportation plate 3-2.

In the first example, the second example, the third example, the fourth example, the fifth example, the sixth example, and the seventh example of the protection components 4 that have been described above, a length L2 (see FIG. 11) of the first protection component 4-1 in the direction along the first direction DR1 is, for example, equal to or longer than 80 centimeters and equal to or shorter than 200 centimeters. In addition, the length of the second protection component 4-2 in the direction along the first direction DR1 is, for example, equal to or longer than 80 centimeters and equal to or shorter than 200 centimeters.

In a case where the first protection component 4-1 includes the first bent portion 43-1, which is disposed between the first plate portion 41-1 and the second plate portion 42-1, the length of the first bent portion 43-1 in the direction along the first direction DR1 is, for example, equal to or longer than 80 centimeters and equal to or shorter than 200 centimeters.

It is sufficient if each of the plurality of protection components 4 is capable of covering an axial moving width of the laser beam LB in the direction along the first direction DR1, and each of the plurality of protection components 4 does not have to be longer than necessary. That is, as illustrated in FIG. 30, in a plan view, in a case where a first range RA1 is defined as a movable range of an axis AT of the laser beam LB in the direction along the first direction DR1, the length and the arrangement of each of the plurality of protection components 4 are preferably set to be capable of traversing at least the entirety of the first range RA1 in the second direction DR2.

Conversely, each of the plurality of protection components 4 does not have to extend to a position out of the first range RA1 in a plan view. From this point of view, in the example illustrated in FIG. 11, the length L2 along the first direction DR1 of the first protection component 4-1 is shorter than the length L1 in the direction along the first direction DR1 of the first transportation plate 3-1. For example, the length L2 along the first direction DR1 of the first protection component 4-1 is equal to or longer than the length of the above-described first range RA1 (see FIG. 30), and is shorter than the length L1 in the direction along the first direction DR1 of the first transportation plate 3-1.

However, the above-described length L2 may be equal to the above-described length L1. In addition, depending on some circumstances, such as a case where side end portions of the first transportation plate 3-1 are reinforced to be attached to the above-described endless components (21, 22), the above-described length L2 may be shorter than the length of the above-described first range RA1 (see FIG. 30).

### (Width of Protection Component 4)

The width of each of the plurality of protection components 4 in the direction along the second direction DR2 is smaller than the width of its corresponding transportation plate 3 in the direction along the second direction DR2. For example, the width of the first protection component 4-1 is smaller than the width of the first transportation plate 3-1, and the width of the second protection component 4-2 is smaller than the width of the second transportation plate 3-2.

In the first example, the second example, the third example, the fourth example, the fifth example, the sixth example, and the seventh example of the protection components 4 that have been described above, a width W2 (see FIG. 11) of the first protection component 4-1 in the direction along the first direction DR1 is, for example, equal to or larger than two centimeters and equal to or smaller than six centimeters.

### (Upward Inclination of Circling Orbit OB)

As illustrated in FIG. 31, the circling orbit OB of the group of transportation plates 3 may include an upward inclination CL having a height that increases from the machine region RG1 toward the discharge region RG2. In a case where the circling orbit OB includes the upward inclination CL, a container 13, which receives the dross D from the dross transportation conveyor 2, or a second transportation conveyor 15, which receives the dross D from the dross transportation conveyor 2 (see FIG. 37, if necessary), is easily disposed in the discharge region RG2.

### (Laser Beam Machine Apparatus 1A)

As illustrated in FIG. 1, the laser beam machine apparatus 1A includes: the dross transportation conveyor 2A; the laser beam irradiator 60; the mover 7, and the controller 8. Additionally, the laser beam machine apparatus 1A may include the workpiece support component 90.

Since the dross transportation conveyor 2A has already been described, repeated description of the dross transportation conveyor 2A will be omitted.

As illustrated in FIG. 32, the laser beam irradiator 60 includes the laser head 61. The laser head 61 includes an emission opening OP, which emits the laser beam. The laser beam irradiator 60 may include a laser light source 63 and an optical component 65 (for example, an optical fiber or a similar component) that transmits the laser beam from the laser light source 63 to the laser head 61.

The mover 7 moves the laser head 61 relative to the workpiece support component 90. The mover 7 also moves the laser head 61 relative to the workpiece W, which is supported by the workpiece support component 90. It is to be noted that the workpiece W, which is supported by the workpiece support component 90, is, for example, a plate material.

In an example illustrated in FIG. 32, the mover 7 includes: mover bodies (71a; 73a), which support the laser head 61; and drivers (71b; 73b), which respectively move the mover bodies (71a; 73a).

In the example illustrated in FIG. 32, the mover 7 includes a first mover 71. The first mover 71 includes: a first mover body 71a, which supports the laser head 61; and a first driver 71b (for example, a first motor), which moves the first mover body 71a.

In the example illustrated in FIG. 32, the first mover body 71a functions as a Z saddle, and the first driver 71b functions as a Z-axis driver. The first driver 71b moves the first mover body 71a in a direction parallel to the vertical direction (in other words, Z-axis direction). More specifically, the first driver 71b is capable of moving the first mover body 71a downward so that the first mover body 71a approaches the workpiece support component 90. In addition, the first driver 71b is capable of moving the first mover body 71a upward so that the first mover body 71a moves away from the workpiece support component 90.

In the example illustrated in FIG. 32, the mover 7 includes a second mover 73. The second mover 73 includes: a second mover body 73a, and a second driver 73b (for example, a second motor), which moves the second mover body 73a. The second mover body 73a supports the first mover body 71a to be movable in a direction parallel to the vertical direction.

In the example illustrated in FIG. 32, the second mover body 73a functions as a Y saddle, and the second driver 73b functions as a Y-axis driver. The second driver 73b moves the second mover body 73a in a direction parallel to the horizontal plane (more specifically, Y-axis direction).

In an example illustrated in FIG. 33, the mover 7 includes a third mover 75. The third mover 75 includes: a third mover body 75a; and a third driver 75b (for example, a third motor), which moves the third mover body 75a. The third mover body 75a supports the second mover body 73a to be movable in a direction parallel to Y-axis direction.

In the example illustrated in FIG. 33, the third mover body 75a functions as an X saddle, and the third driver 75b functions as an X-axis driver. The third driver 75b moves the third mover body 75a in a direction parallel to the horizontal plane (more specifically, X-axis direction perpendicular to Z axis and Y axis).

As illustrated in FIG. 32, the third mover body 75a may be made up of a gate-shaped structure. In the example illustrated in FIG. 33, the third mover body 75a is movable to traverse the machine region RG1 in a plan view (in other words, when viewed in a direction opposite to the third direction DR3). The third mover body 75a is supported by a base 70, so that third mover body 75a is movable in a direction parallel to X-axis direction.

In an example illustrated in FIG. 34, the workpiece support component 90 includes a pin support for supporting a workpiece that is a plate material. Such a pin support includes a plurality of top portions 92 for supporting the workpiece W, which is the plate material.

In the example illustrated in FIG. 34, the workpiece support component 90 includes a plurality of plate components 91, each of which is disposed in an upright attitude with respect to a horizontal plane (for example, X-Y plane in FIG. 34). Each of the plurality of plate components 91 includes an edge portion EG having a saw blade shape.

The workpiece support component 90 may include equal to or more than 10 plate components 91, each of which is disposed in an upright attitude with respect to the horizontal plane, or may include equal to or more than 20 plate components 91, each of which is disposed in the upright attitude with respect to the horizontal plane. Each plate component 91 is, for example, made of metal.

In the example illustrated in FIG. 34, the workpiece support component 90 is a pallet PT, which is transferable. The pallet PT includes: a plurality of plate components 91; and a frame body 93, to which the plurality of plate components 91 are attached. A bottom portion of the frame body 93 defines a bottom opening. The dross D, which is generated by the irradiation of the laser beam LB on the workpiece W, passes through a gap between the two adjacent plate components 91 and the bottom opening defined by the frame body 93, and falls toward the dross transportation conveyor 2A.

As illustrated in FIG. 35, the laser beam machine apparatus 1A may include a transferer 11, which transfers the workpiece support component 90. The transferer 11 transfers the workpiece support component 90 from the machine region RG1 to a removal region RG3. Then, a machined workpiece Wb (more specifically, a machined plate material) is removed from the workpiece support component 90, which is disposed in the removal region RG3. As illustrated in FIG. 36, the machined workpiece Wb may be removed by using a sucker 121, which is capable of sucking the machined workpiece Wb, or may be removed by using a fork capable of scooping up the machined workpiece Wb. Alternatively, the machined workpiece Wb may be removed by a robot or an operator.

In an example illustrated in FIG. 36, the laser beam machine apparatus 1A includes a workpiece transferer 12 (for example, a robot hand), which transfers a workpiece before machining and a machined workpiece Wb. The workpiece transferer 12 may be a plate material transferer 12a, which transfers a workpiece that is a plate material. The plate material transferer 12a may include a plurality of suckers 121, which suck the workpiece that is the plate material, or may include a fork that supports the workpiece that is the plate material from below. Alternatively, the workpiece W before machining and the machined workpiece Wb may be manually transferred by an operator.

In the example illustrated in FIG. 1, the laser beam machine apparatus 1A includes the container 13, which receives the dross D from the dross transportation conveyor 2A. The container 13 is disposed immediately below the dross transportation conveyor 2A in the discharge region RG2.

The laser beam machine apparatus 1A may include the second transportation conveyor 15, which receives the dross D from the dross transportation conveyor 2A. In an example illustrated in FIG. 37, a dross transportation surface of the second transportation conveyor 15 is disposed immediately below the dross transportation conveyor 2A in the discharge region RG2. In the example illustrated in FIG. 37, the second transportation conveyor 15 transports the dross that has been received from the dross transportation conveyor 2A to the container 13.

In an example illustrated in FIG. 38, the controller 8 controls the laser beam irradiator 60 and the mover 7 (for example, the first driver 71b, the second driver 73b, and the third driver 75b). The controller 8 may control the transferer 11 (see FIG. 35), which transfers the workpiece support component 90, and/or the workpiece transferer 12 (see FIG. 36), which transfers the workpiece W. The controller 8 may also control the driver 29 of the dross transportation conveyor 2A.

In an example illustrated in FIG. 39, the controller 8 transmits an emission command R1 to the laser beam irradiator 60 (for example, the laser light source 63), and causes the laser beam LB to be emitted from the laser head 61. More specifically, the controller 8 transmits the emission command R1 to the laser beam irradiator 60 (for example, the laser light source 63), and the laser beam irradiator 60, which receives the emission command R1, emits the laser beam LB from the laser head 61 (more specifically, the emission opening of the laser head 61).

In the example illustrated in FIG. 39, the controller 8 transmits a movement command S to the mover 7, and moves the laser head 61. More specifically, the controller 8 transmits the movement command S to the mover 7, and the mover 7, which receives the movement command S, moves the laser head 61.

As illustrated in FIG. 39, the controller 8 includes: a hardware processor 80 (hereinafter, simply referred to as a "processor 80"); a memory 82; a communication circuit 84; and an inputter 86 (for example, a display 862 equipped with a touch panel). The processor 80, the memory 82, the communication circuit 84, and the inputter 86 are connected with each other through a bus 88. Data necessary for machining the workpiece W (for example, workpiece data 826 including shape data of the workpiece W and machine position data of the workpiece W) may be input into the controller 8 via the inputter 86, or may be input into the controller 8 from another computer via the communication circuit 84. It is to be noted that the inputter 86 is not limited to the display 862, which is equipped with a touch panel. For example, the controller 8 may include: the inputter 86 such as a button, a switch, a lever, a pointing device, or a keyboard; and a display that displays data that has been input into the inputter 86 or other information.

The memory 82 stores data such as the workpiece data 826 and programs such as a machining program 822. The memory 82 is a storage medium readable by the processor 80 of the controller 8. The memory 82 may be, for example, a non-volatile or volatile semiconductor memory such as a RAM, a ROM, or a flash memory, may be a magnetic disk, or may be a memory in another format.

The processor 80 of the controller 8 executes the machining program 822, which is stored in the memory 82, and thus the controller 8 generates a control command. In addition, the communication circuit 84 transmits such a control command to to-be-controlled equipment (more specifically, the laser beam irradiator 60, the mover 7, the transferer 11, the workpiece transferer 12, and the driver 29). In this manner, the processor 80 executes the machining program 822, and thus the controller 8 is capable of controlling the laser beam irradiator 60, the mover 7, the transferer 11, the workpiece transferer 12, and the driver 29.

The controller 8 may control the moving speed of the group of transportation plates 3 in conjunction with the control of at least one of the laser beam irradiator 60 and the mover 7.

For example, while the laser beam irradiator 60 stops emission of the laser beam LB, the controller 8 may control the driver 29 so that the group of transportation plates 3 moves at a first speed (a speed other than zero), and while the laser beam irradiator 60 is emitting the laser beam LB, the controller 8 may control the driver 29 so that the group of transportation plates 3 move at a second speed faster than the first speed.

For example, the controller 8 may control the driver 29 to change the moving speed of the group of transportation plates 3 in accordance with the magnitude of the output of the laser beam LB emitted by the laser beam irradiator 60 or the type of machining performed by the laser beam irradiator 60 (for example, drilling or cutting).

### (Cooler 95)

As illustrated in FIG. 40, the laser beam machine apparatus 1A may include a cooler 95, which forcibly cools the group of transportation plates 3.

For example, the laser beam machine apparatus 1A may include a cooler 95a of an air-cooling type for blowing air onto the group of transportation plates 3. In an example illustrated in FIG. 40, the cooler 95a includes an air injector 96, which blows air onto the back surface 3n of each transportation plate 3 in the group of transportation plates 3. Alternatively or additionally, the cooler 95a may include an air injector for blowing air onto the transportation surface 3u of each transportation plate 3 in the group of transportation plates 3.

Alternatively or additionally, the laser beam machine apparatus 1A may include a cooler 95b of a liquid-cooling type for cooling the group of transportation plates 3 with a liquid (for example, water). In an example illustrated in FIG. 40, the cooler 95b includes a liquid bath 97 (for example, a water tank), which is disposed so that the circling orbit of the group of transportation plates 3 passes through the liquid bath 97 laterally. The group of transportation plates 3 passes through the liquid (for example, water) in the liquid tank 97, and are then cooled. Furthermore, the liquid that has adhered to the surfaces of the group of transportation plates 3 is vaporized by the irradiation of the laser beam (vaporization heat), thereby eliminating or minimizing a temperature rise of the transportation plates 3.

### (Second Embodiment)

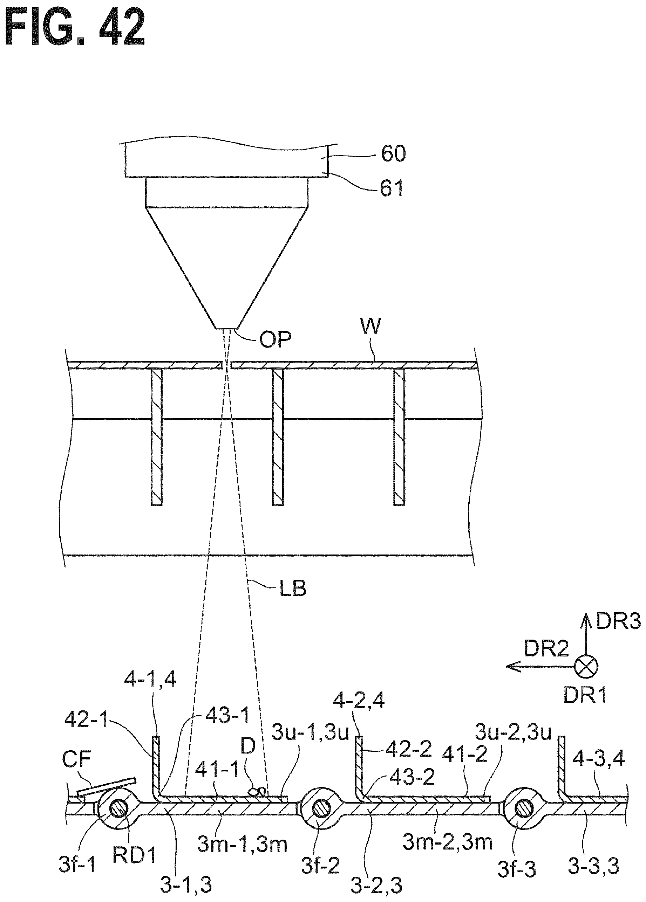

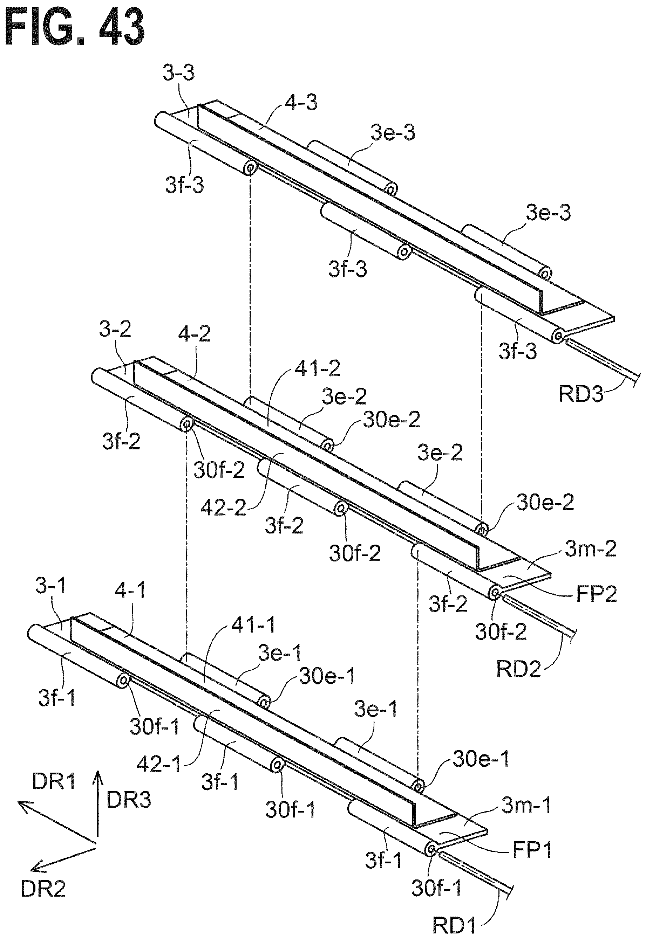

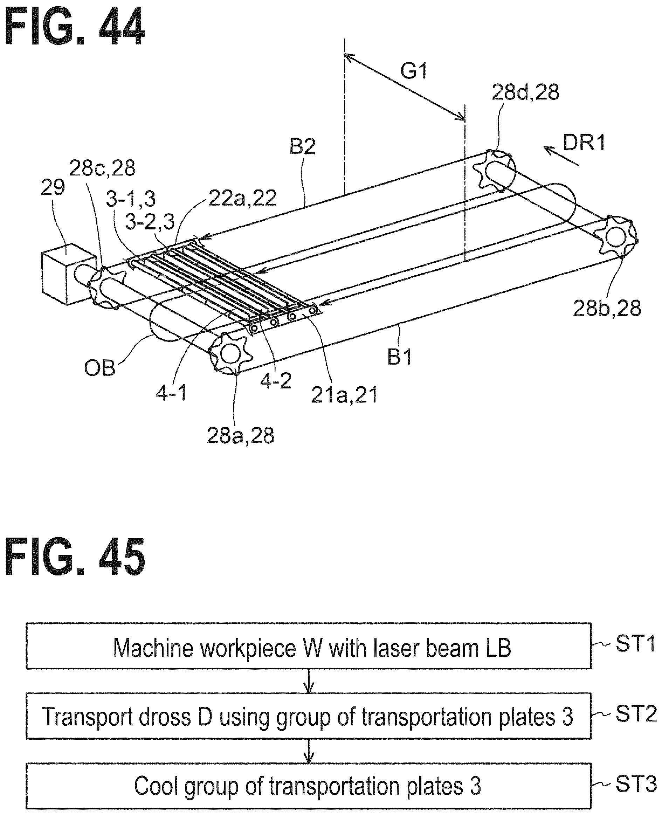

With reference to FIGs. 41 to 44, a dross transportation conveyor 2B and a laser beam machine apparatus 1B according to the second embodiment will be described. FIG. 41 is a schematic cross-sectional view of the laser beam machine apparatus 1B according to the second embodiment. FIG. 42 is a schematic cross-sectional view of a part of the laser beam machine apparatus 1B according to the second embodiment. FIG. 43 is an exploded perspective view of a first transportation plate 3-1 to which a first protection component 4-1 is attached, a second transportation plate 3-2 to which a second protection component 4-2 is attached, and a third transportation plate 3-3 to which a third protection component 4-3 is attached, schematically illustrating the first transportation plate 3-1, the second transportation plate 3-2, and the third transportation plate 3-3. FIG. 44 is a schematic perspective view of a state in which a group of transportation plates 3 including the first transportation plate 3-1 and the second transportation plate 3-2 is movable along the circling orbit OB.

The dross transportation conveyor 2B according to the second embodiment is different from the dross transportation conveyor 2A according to the first embodiment in that each transportation plate 3 in the group of transportation plates 3 is hinge-coupled with another transportation plate.

In the second embodiment, differences from the first embodiment will be mainly described. On the other hand, in the second embodiment, repeated descriptions of the matters that have been described in the first embodiment will be omitted. Therefore, it is needless to say that the matters that have been described in the first embodiment are applicable to the second embodiment, even though they are not explicitly described in the second embodiment. On the contrary, all matters to be described in the second embodiment are applicable to the first embodiment.

In examples illustrated in FIGs. 41 and 42, the dross transportation conveyor 2B according to the second embodiment includes: (1) a group of transportation plates 3 including a first transportation plate 3-1, which extends in the first direction DR1, and a second transportation plate 3-2, which is disposed to be adjacent to the first transportation plate 3-1, and which extends in the first direction DR1, the group of transportation plates 3 transporting dross generated by the irradiation of the laser beam LB on the workpiece W ; (2) a first protection component 4-1, which covers at least partially a first transportation surface 3u-1 of the first transportation plate 3-1 to prevent the laser beam from reaching the first transportation plate 3-1; and (3) a second protection component 4-2, which covers at least partially a second transportation surface 3u-2 of the second transportation plate 3-2 to prevent the laser beam from reaching the second transportation plate 3-2.

In the example illustrated in FIG. 41, the laser beam machine apparatus 1B according to the second embodiment includes: the above-described dross transportation conveyor 2B; the laser beam irradiator 60 including the laser head 61, which irradiates the workpiece W with a laser beam; the mover 7, which moves the laser head 61 relative to the workpiece support component 90 for supporting the workpiece W; the laser beam irradiator 60; and the controller 8, which controls the mover 7.

Therefore, the dross transportation conveyor 2B and the laser beam machine apparatus 1B according to the second embodiment have the same effects as those of the dross transportation conveyor 2A and the laser beam machine apparatus 1A according to the first embodiment.

As illustrated in FIG. 43, the first rear end portion 3e-1 of the first transportation plate 3-1 and the second front end portion 3f-2 of the second transportation plate 3-2 are hinge-coupled with each other. In the example illustrated in FIG. 43, a rod (hereinafter, referred to as a "second rod RD2") is disposed to pass through both the first rear end portion 3e-1 of the first transportation plate 3-1 and the second front end portion 3f-2 of the second transportation plate 3-2, and thus the first rear end portion 3e-1 of the first transportation plate 3-1 and the second front end portion 3f-2 of the second transportation plate 3-2 are hinge-coupled with each other. In addition, a rod (hereinafter, referred to as a "third rod RD3") is disposed to pass through both the second rear end portion 3e-2 of the second transportation plate 3-2 and the third front end portion 3f-3 of the third transportation plate 3-3, and thus the second rear end portion 3e-2 of the second transportation plate 3-2 and the third front end portion 3f-3 of the third transportation plate 3-3 are hinge-coupled with each other.

### (Optional and Additional Configurations)

Subsequently, with reference to FIGs. 1 to 44, optional and additional configurations that are adoptable in the dross transportation conveyor 2B according to the second embodiment and the laser beam machine apparatus 1B will be described.

In the example illustrated in FIG. 41, the group of the transportation plates 3 transports the dross from the machine region RG1 to the discharge region RG2. In the example illustrated in FIG. 41, each transportation plate 3 in the group of transportation plates 3 is reversed (more specifically, makes a turn by 180 degrees around a horizontal shaft) in the discharge region RG2. As a result, the dross D transported by the group of transportation plates 3 is discharged from the group of transportation plates 3 in the discharge region RG2. It is to be noted that when the cut-off pieces CF (see FIG. 42) are transported by the group of transportation plates 3, the cut-off pieces CF are also discharged from the group of transportation plates 3 in the discharge region RG2.

In the example illustrated in FIG. 44, the dross transportation conveyor 2B includes: the first endless component 21 (more specifically, the first endless chain 21a); the second endless component 22 (more specifically, the second endless chain 22a); and the driver 29. The first endless component 21 and the second endless component 22 support the group of transportation plates 3. More specifically, the group of transportation plates 3 is attached to the first endless component 21 and the second endless component 22.

The first endless component 21 and the second endless component 22 are directly or indirectly driven by the driver 29. Since the first endless component 21, the second endless component 22, and the driver 29 have been described in the first embodiment, the repeated descriptions of these configurations will be omitted.

### (Group of Transportation Plates 3)

The group of transportation plates 3 moves along the circling orbit OB. As illustrated in FIG. 44, the circling orbit OB of the group of transportation plates 3 is parallel to a first circling orbit B1 of the first endless chain 21a, and is parallel to the second circling orbit B2 of the second endless chain 22a. In the example illustrated in FIG. 41, the group of transportation plates 3 is disposed continuously to form an annular transportation body.

The length of each transportation plate 3 in the group of transportation plates 3 is, for example, equal to or longer than one meter and equal to or shorter than three meters. The width of each transportation plate 3 in the group of transportation plates 3 is, for example, equal to or larger than four centimeters and equal to or smaller than 20 centimeters. The plate thickness of each transportation plate 3 in the group of transportation plates 3 (more specifically, the plate thickness of the middle portion 3m of each transportation plate 3 in the group of transportation plates 3) is, for example, equal to or smaller than 10 millimeters or equal to or smaller than five millimeters. Each transportation plate 3 in the group of transportation plates 3 is made of metal. Each transportation plate 3 in the group of transportation plates 3 is made of, for example, steel, more specifically, a hot-rolled mild steel plate, a cold-rolled steel plate, or a cold-rolled stainless steel plate.

In the group of transportation plates 3, the first transportation plate 3-1 and the second transportation plate 3-2 will be representatively described.

In the example illustrated in FIG. 43, the first transportation plate 3-1 includes: a first front end portion 3f-1; a first rear end portion 3e-1; and a first middle portion 3m-1, which is disposed between the first front end portion 3f-1 and the first rear end portion 3e-1. In the first front end portion 3f-1 of the first transportation plate 3-1, a plurality of front reception portions 30f-1, which receive a rod (hereinafter, referred to as a "first rod RD1"), are formed (more specifically, a plurality of through hole portions into which the first rod RD1 is inserted). In addition, in the first rear end portion 3e-1 of the first transportation plate 3-1, a plurality of rear reception portions 30e-1, which receive the second rod RD2, are formed (more specifically, a plurality of through hole portions into which the second rod RD2 is inserted). In the example illustrated in FIG. 43, the first middle portion 3m-1 of the first transportation plate 3-1 includes a first flat portion FP1, which extends in the first direction DR1.

In the example illustrated in FIG. 43, the second transportation plate 3-2 includes: a second front end portion 3f-2; a second rear end portion 3e-2; and a second middle portion 3m-2, which is disposed between the second front end portion 3f-2 and the second rear end portion 3e-2. In the second front end portion 3f-2 of the second transportation plate 3-2, a plurality of front reception portions 30f-2, which receive the second rod RD2, are formed (more specifically, a plurality of through hole portions into which the second rod RD2 is inserted). In addition, in the second rear end portion 3e-2 of the second transportation plate 3-2, a plurality of rear reception portions 30e-2, which receive the third rod RD3, are formed (more specifically, a plurality of through hole portions into which the third rod RD3 is inserted). In the example illustrated in FIG. 43, the second middle portion 3m-2 of the second transportation plate 3-2 includes a second flat portion FP2, which extends in the first direction DR1.

### (Plurality of Protection Components 4)

As illustrated in FIG. 42, the dross transportation conveyor 2B includes a plurality of protection components 4, which include a first protection component 4-1, a second protection component 4-2, and a third protection component 4-3. Each of the plurality of protection components 4 covers at least partially the transportation surface of its corresponding transportation plate 3 to prevent the laser beam LB from reaching the transportation plate 3. Each of the plurality of protection components 4 extends along the first direction DR1. Each of the plurality of protection components 4 is directly or indirectly attached to its corresponding transportation plate 3. The protection component 4 is preferably attached to each of all the transportation plates 3 in the group of transportation plates 3.

As the plurality of protection components 4 of the dross transportation conveyor 2B according to the second embodiment, the plurality of protection components 4, which have been described in the first embodiment, are adoptable. More specifically, in the second embodiment, the first example, the second example, the third example, the fourth example, the fifth example, the sixth example, and the seventh example of the protection components 4 that have been described in the first embodiment are adoptable. In the second embodiment, the description in the first embodiment is quoted as the description of the plurality of protection components 4, and the repeated descriptions of the plurality of protection components 4 will be omitted.

### (Laser Beam Machine Apparatus 1B)

As illustrated in FIG. 41, the laser beam machine apparatus 1B includes: the dross transportation conveyor 2B; the laser beam irradiator 60; the mover 7; and the controller 8. Additionally, the laser beam machine apparatus 1B may include the workpiece support component 90. Since the laser beam irradiator 60, the mover 7, the controller 8, and the workpiece support component 90 have already been described in the first embodiment, repeated descriptions of these configurations will be omitted.

### (Third Embodiment)

A workpiece machining method according to the third embodiment will be described with reference to FIGs. 1 to 45. FIG. 45 is a flowchart of an example of a workpiece machining method according to the third embodiment.

The workpiece machining method according to the third embodiment may be performed by using the laser beam machine apparatus 1A according to the first embodiment, may be performed by using the laser beam machine apparatus 1B according to the second embodiment, or may be performed by using another laser beam machine apparatus.

In a first step ST1, the workpiece W is machined. The first step ST1 is a workpiece machining process. In the workpiece machining process, the workpiece W is machined by the irradiation of the laser beam LB. More specifically, the workpiece W is irradiated with the laser beam LB from the laser head 61 of the laser beam irradiator 60, and thus the workpiece W is machined. The wavelength of the laser beam LB emitted from the laser head 61 of the laser beam irradiator 60 is, for example, equal to or longer than 1060 nanometers and equal to or shorter than 1080 nanometers.

The workpiece W to be machined in the workpiece machining process (the first step ST1) is, for example, a plate material. The workpiece machining process may include: moving the laser head 61, which emits the laser beam LB; and cutting the workpiece W with the laser beam. In addition, the workpiece machining process may include emitting the laser beam LB from the laser head 61, which is temporarily in a stationary state, to drill the workpiece W with the laser beam. The workpiece W is machined by the laser beam LB, and then a product (for example, a plate product) is formed from the workpiece W.

In the workpiece machining process (the first step ST1), the workpiece W is irradiated with the laser beam LB, and then the dross D is generated from the workpiece W. Additionally, the workpiece W is irradiated with the laser beam LB, and then the cut-off pieces CF may be generated from the workpiece W. The dross D and/or the cut-off pieces CF that have been generated fall downward in the machine region RG1. The dross D and/or the cut-off pieces CF, which fall downward, are received by the dross transportation conveyor 2.

In the workpiece machining process (the first step ST1), the laser beam LB that passes through the workpiece W reaches the dross transportation conveyor 2. The laser beam LB that reaches the dross transportation conveyor 2 raises the temperature of the group of transportation plates 3 including the first transportation plate 3-1 and the second transportation plate 3-2. The first transportation plate 3-1, the second transportation plate 3-2, and another plate are deformed by thermal expansion.

In a second step ST2, the dross D is transported. The second step ST2 is a dross transporting process. In the dross transporting process, the dross D, which is generated by the irradiation of the laser beam LB on the workpiece W, is transported by using the group of transportation plates 3 including the first transportation plate 3-1, which extends in the first direction DR1, and the second transportation plate 3-2, which is disposed to be adjacent to the first transportation plate 3-1, and which extends in the first direction DR1. More specifically, the group of transportation plates 3 transports the dross D from the machine region RG1 to the discharge region RG2.

The second step ST2 (the dross transporting process) is performed in parallel with the first step ST1 (the workpiece machining process). More specifically, the workpiece W is irradiated with the laser beam LB from the laser beam irradiator 60 in a state in which the dross transportation conveyor 2 is being driven (in other words, in a state in which the group of transportation plates 3 is moving along the circling orbit OB). By the irradiation of the laser beam LB on the workpiece W, the dross D and/or the cut-off pieces CF are intermittently or continuously generated, and the generated dross D and/or the generated cut-off pieces CF are sequentially transported by the dross transportation conveyor 2.

In the example illustrated in FIG. 12, FIG. 13, FIG. 14, FIG. 16, FIG. 17, FIG. 19, FIG. 20, FIG. 21, FIG. 22, FIG. 24, FIG. 26, or FIG. 42, the workpiece machining process (a process of machining the workpiece W) is performed, in a state in which the first protection component 4-1, which covers at least partially the first transportation surface 3u-1 of the first transportation plate 3-1, prevents the laser beam LB from reaching the first transportation plate 3-1. In other words, the workpiece machining process (the process of machining the workpiece W) is performed in a state in which heat input into the first transportation plate 3-1 due to the irradiation of the laser beam is prevented by the first protection component 4-1. Therefore, although the first transportation plate 3-1 is thermally deformed due to the laser beam that reaches at least the first protection component 4-1, major thermal deformation that leads to thermoplastic deformation is prevented.

In the example illustrated in FIG. 12, FIG. 13, FIG. 14, FIG. 16, FIG. 17, FIG. 19, FIG. 20, FIG. 21, FIG. 22, FIG. 24, FIG. 26, or FIG. 42, the workpiece machining process (the process of machining the workpiece W) is performed, in a state in which the second protection component 4-2, which covers at least partially the second transportation surface 3u-2 of the second transportation plate 3-2, prevents the laser beam LB from reaching the second transportation plate 3-2. In other words, the workpiece machining process (the process of machining the workpiece W) is performed in a state in which heat input into the second transportation plate 3-2 due to the irradiation of the laser beam is prevented by the second protection component 4-2. Therefore, although the second transportation plate 3-2 is thermally deformed due to the laser beam that reaches at least the second protection component 4-2, major thermal deformation that leads to thermoplastic deformation is prevented.

In a third step ST3, the group of transportation plates 3 is cooled. The third step ST3 is a cooling process. The cooling process (the third step ST3) is performed by, for example, natural cooling. More specifically, after the machining of the workpiece W ends, the cooling process is performed while the group of transportation plates 3 is left as they are at room temperature.

Additionally, the cooling process may include forcibly cooling the group of transportation plates 3 using at least one of the cooler 95a of an air-cooling type and the cooler 95b of a liquid-cooling type. For example, as illustrated in FIG. 40, the cooling process may include blowing, by the cooler 95a of the air-cooling type, air onto the group of transportation plates 3. Alternatively or additionally, the cooling process may include causing the group of transportation plates 3 to pass through the liquid (for example, water) in the liquid bath 97. Further, the cooling process may include spraying, by the cooler 95b of the liquid-cooling type, the liquid (for example, water) onto the group of transportation plates 3.

Forcibly cooling the group of transportation plates 3 using at least one of the cooler 95a of the air-cooling type and the cooler 95b of the liquid-cooling type may be performed in parallel with the workpiece machining process (the first step ST1) and the dross transporting process (the second step ST2).

In the workpiece machining method according to the third embodiment, the thermoplastic deformation of the first transportation plate 3-1 is prevented, and thus the first transportation plate 3-1 that has been cooled in the cooling process returns to its original shape before the thermal deformation. Also in the workpiece machining method according to the third embodiment, the thermoplastic deformation of the second transportation plate 3-2 is prevented, and thus the second transportation plate 3-2 that has been cooled in the cooling process returns to its original shape before the thermal deformation. By repeatedly performing the above-described first step ST1 to the above-described third step ST3, each transportation plate 3 in the group of transportation plates 3 may be plastically deformed to some extent, but plastic deformation that causes a failure in the operation of the dross transportation conveyor 2 is avoided.

The present invention is not limited to the above-described embodiments or modifications, and it is apparent that the embodiments or modifications can be appropriately modified or changed within the scope of the technical idea of the present invention. In addition, various techniques used in each embodiment or each modifications are applicable to other embodiments or other modifications as long as a technical contradiction does not occur. Further, any additional configuration in each embodiment or each modification can be omitted as appropriate.

### Description of the Reference Numerical

1, 1A, 1B ... Laser beam machine apparatus, 2, 2A, 2B ... Dross transportation conveyer, 3 ... Transportation plate, 3-1 ... First transportation plate, 3-2 ... Second transportation plate, 3-3 ... Third transportation plate, 3-N ... Transportation plate, 3a, 3a -1, 3a-2, 3a-3 ... Left end portion, 3b, 3b-1, 3b-2, 3b-3 ... Right end portion, 3e ... Rear end portion, 3e-1 ... First rear end portion, 3e-2 ... Second rear end portion, 3e-3 ... Third rear end portion, 3f ... Front end portion, 3f-1 ... First front end portion, 3f-2 ... Second front end portion, 3f-3 ... Third front end portion, 3m ... Middle portion, 3m-1 ... First middle portion, 3m-2 ... Second middle portion, 3m-3 ... Third middle portion, 3n ... Back surface, 3n-1 ... First back surface, 3n-2 ... Second back surface, 3u ... Transportation surface, 3u-1 ... First transportation surface, 3u-2 ... Second transportation surface, 3u-3 ... Third transportation surface, 4 ... Protection component, 4-1 ... First protection component, 4-2 ... Second protection component, 4-3 ... Third protection component, 4a-1 ... First end portion, 4b-1 ... Second end portion, 4h ... Opening, 4h-1 ... First opening, 4h-2 ... Second opening, 4m-1 ... Center portion in longitudinal direction, 4m-2 ... Center portion in longitudinal direction, 7 ... Mover, 8 ... Controller, 11 ... Transferer, 12 ... Workpiece transferer, 12a ... Plate material transferer, 13 ... Container, 15 ... Second transportation conveyer, 21 ... First endless component, 21a ... First endless chain, 22 ... Second endless component, 22a ... Second endless chain, 28 ... Sprocket, 28a ... First sprocket, 28b ... Second sprocket, 28c ... Third sprocket, 28d ... Fourth sprocket, 29 ... Mover, 30e-1, 30e-2 ... Rear reception portion, 30f-1, 30f-2 ... Front reception portion, 41-1 ... First plate portion, 41-2 ... Third plate portion, 42-1 ... Second plate portion, 42-2 ... Fourth plate portion, 43-1 ... First bent portion, 43-2 ... Second bent portion, 44-1 ... Rear plate portion, 45-1 ... First cover portion, 45-2 ... Second cover portion, 46, 46-1, 46-2 ... Heat insulation material, 47-1 ... Bent portion, 48-1, 48-2 ... Base material, 49-1, 49-2 ... Laser beam reflection layer, 60 ... Laser beam irradiator, 61 ... Laser head, 63 ... Laser light source, 65 ... Optical component, 70 ... Base, 71 ... First mover, 71a ... First mover body, 71b ... First driver, 73 ... Second mover, 73a ... Second mover body, 73b ... Second driver, 75 ... Third mover, 75a ... Third mover body, 75b ... Third driver, 80 ... Hardware processor, 82 ... Memory, 84 ... Communication circuit, 86 ... Inputter, 88 ... Bus, 90 ... Workpiece support component, 91 ... Plate material, 92 ... Top portion, 93 ... Frame body, 95, 95a, 95b ... Cooler, 96 ... Air injector, 97 ... Liquid bath, 121 ... Sucker, 822 ... Machining program, 826 ... Workpiece data, 862 ... Display equipped with touch panel, AL, AL1, AL2 ... Air layer, B1 ... First circling orbit, B2 ... Second circling orbit, BA, BA1, BA2, BB, BB1, BB2 ... Bent portion, BT ... Bolt, CF ... Cut-off piece, CP ... Curved portion, CP1 ... First curved portion, CP2 ... Second curved portion, D ... Dross, EG ... Edge portion, EP ... Rear end portion, FP1 ... First flat portion, FP2 ... Second flat portion, J1 ... Welded portion, LB ... Laser beam, OB ... Circling orbit, OP ... Emission opening, PT ... Pallet, R1 ... Emission command, RD1 ... First rod, RD 2 ... Second rod, RD 3 ... Third rod, RG1 ... Machine region, RG2 ... Discharge region, RG3 ... Removal region, S ... Movement command, S1 ... Dross support surface, S2 ... Dross support surface, SP1 ... First reception space, SR1 ... Structure, TP ... Upright portion, TP1 ... First upright portion, TP2 ... Second upright portion, W ... Workpiece, Eb ... Machined workpiece, h1, h2 ... Hole portion.

## Claims

1. A dross transportation conveyer comprising:
a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser on a workpiece;
a first protection component that covers at least partially a first transportation surface of the first transportation plate to prevent the laser from reaching the first transportation plate; and
a second protection component that covers at least partially a second transportation surface of the second transportation plate to prevent the laser from reaching the second transportation plate.

2. The dross transportation conveyer according to claim 1, wherein a rear end portion of the first transportation plate is disposed to overlap a front end portion of the second transportation plate.

3. The dross transportation conveyer according to claim 1, wherein a rear end portion of the first transportation plate is hinge-coupled with a front end portion of the second transportation plate.

4. The dross transportation conveyer according to claim 2 or 3, wherein the first protection component comprises a first cover portion that covers either at least partially a front end portion of the first transportation plate or at least partially the front end portion of the second transportation plate.

5. The dross transportation conveyer according to one of claims 1 to 4,
wherein the first protection component comprises:
a first plate portion;
a second plate portion; and
a first bent portion disposed between the first plate portion and the second plate portion, the first bent portion extending in the first direction, and
wherein the second protection component comprises:
a third plate portion;
a fourth plate portion; and
a second bent portion disposed between the third plate portion and the fourth plate portion, the second bent portion extending in the first direction.

6. The dross transportation conveyer according to claim 5,
wherein the first plate portion is disposed in contact with the first transportation plate,
wherein the second plate portion rises in a direction away from the first transportation plate,
wherein the third plate portion is disposed in contact with the second transportation plate, and
wherein the fourth plate portion rises in a direction away from the second transportation plate.

7. The dross transportation conveyer according to claim 6,
wherein a first reception space that receives the dross is formed between the second plate portion of the first protection component and the fourth plate portion of the second protection component.

8. The dross transportation conveyer according to one of claims 1 to 7, wherein laser reflectivity on a dross support surface of the first protection component is higher than laser reflectivity on the first transportation surface of the first transportation plate.

9. The dross transportation conveyer according to one of claims 1 to 8, wherein either an air layer or a heat insulation material is interposed between the first transportation plate and the first protection component.

10. The dross transportation conveyer according to one of claims 1 to 3, wherein in response to the irradiation of the laser on the first protection component, the first protection component is configured to be deflected in a direction away from the first transportation plate.

11. The dross transportation conveyer according to one of claims 1 to 10, wherein the first protection component is welded with the first transportation plate.

12. The dross transportation conveyer according to one of claims 1 to 11,
wherein the group of transportation plates is configured to move along a circling orbit and transport the dross from a machine region to a discharge region, and
wherein the circling orbit comprises an upward inclination having a height that increases from the machine region toward the discharge region.

13. A laser machine apparatus comprising:
a laser irradiator comprising a laser head that irradiates a workpiece with a laser;
a mover that moves the leaser head relative to a workpiece support component that supports the workpiece;
a controller configured to control the laser irradiator and the mover; and
a dross transportation conveyor,
wherein the dross transportation conveyor comprises:
a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of the laser on the workpiece;
a first protection component that covers at least partially a first transportation surface of the first transportation plate to prevent the laser from reaching the first transportation plate; and
a second protection component that covers at least partially a second transportation surface of the second transportation plate to prevent the laser from reaching the second transportation plate.

14. The laser machine apparatus according to claim 13, further comprising a cooler that forcibly cools the group of transportation plates.

15. A workpiece machining method comprising the steps of:
machining a workpiece by irradiating the workpiece with a laser; and
transporting dross generated by irradiating the workpiece with the laser, by using a group of transportation plates including a first transportation plate and a second transportation plate, the first transportation plate extending in a first direction, the second transportation plate being disposed to be adjacent to the first transportation plate and extending in the first direction,
wherein the step of machining the workpiece is performed,
in a state in which the laser reaching the first transportation plate is prevented by a first protection component that covers at least partially a first transportation surface of the first transportation plate, and
in a state in which the laser reaching the second transportation plate is prevented by a second protection component that covers at least partially a second transportation surface of the second transportation plate.
